# EUROPEAN PATENT APPLICATION

(11) **EP 4 094 875 A1**
(43) Date of publication of application: **30.11.2022**
(21) Application number: 21745008.9
(22) Date of filing: 19.01.2021
(51) Int. Cl.: B23K 26/03, B22F 3/105, B22F 3/16, B23K 26/21, B23K 26/34, B29C 64/153, B29C 64/393, B33Y 30/00, B33Y 50/02

(54) **PROCESSING SYSTEM**

(30) Priority: 20.01.2020 JP 2020006718
(71) Applicant: NIKON CORPORATION, Minato-ku Tokyo 108-6290 (JP)
(72) Inventor: YASUBA, Koichi, Tokyo 108-6290 (JP); MAEDA, Yasuhisa, Tokyo 113-0034 (JP); KINOSHITA, Shinichiro, Tokyo 113-0034 (JP); ONOBORI, Yoshikazu, Tokyo 113-0034 (JP)
(74) Representative: Hoffmann Eitle
(86) International application number: PCT/JP2021/001681
(87) International publication number: WO 2021/149683

(57) **Abstract**

A processing system includes: an irradiation part for irradiating an object with an energy beam; a powder supply part for supplying powder to a melt pool formed by an irradiation of the energy beam; an illumination apparatus for illuminating a position of a solidified part where the melt pool is solidified with a second light having a wavelength different from a wavelength of a first light emitted from the melt pool; an imaging apparatus for optically receive at least a part of the first light and at least a part of a third light from a part of the solidified part that is illuminated with the second light; and a display apparatus for displaying, based on an output of the imaging apparatus, an image related to the melt pool and the solidified part.

## Description

### Technical Field

The present invention relates to a technical field of a processing system that is configured to process an object, for example.

### Background Art

A Patent Literature 1 discloses one example of a processing system that is configured to process an object. One of a technical problem of this processing system is to properly observe the object that is a processing target.

### Citation List

### Patent Literature

Patent Literature 1: EP 1769880A

### Summary of Invention

A first aspect provides a processing system including: an irradiation part that is configured to irradiate an object with an energy beam; a powder supply part that is configured to supply powder to a melt pool formed by an irradiation of the energy beam; an illumination apparatus that is configured to illuminate a part of a solidified part where the melt pool is solidified at least with a second light having a wavelength range that is different from a wavelength range of a first light emitted from the melt pool; an imaging apparatus that is configured to optically receive at least a part of the first light and at least a part of a third light from a part of the solidified part that is illuminated with the second light; and a display apparatus that is configured to display, based on an output of the imaging apparatus, an image related to the melt pool and the solidified part.

A second aspect provides a processing system including: an irradiation part that is configured to irradiate an object with an energy beam; a powder supply part that is configured to supply powder to a melt pool formed by an irradiation of the energy beam; a filter member that allows at least a part of a first light emitted from the melt pool and at least a part of a third light from a part of a solidified part where the melt pool is solidified to pass therethrough; an imaging apparatus that is configured to optically receive at least a part of the first light and at least a part of the third light that have passed through the filter member; and a display apparatus that is configured to display, based on an output from the imaging apparatus, an image related to the melt pool and a part where the melt pool is solidified.

A third aspect provides a processing system including: a processing apparatus that is configured to process an object by irradiating the object with an energy beam; an illumination apparatus that is configured to illuminate a part of the object at least with a second light in a wavelength range that is different from a wavelength range of a first light emitted from an irradiated part of the object that is irradiated with the energy beam; a detection apparatus that is configured to detect a light from a part of the object; and a display apparatus that is configured to display, based on an output from the detection apparatus, an image related to the object illuminated with the second light.

A fourth aspect provides a processing system including: a processing apparatus that is configured to process an object by irradiating the object with an energy beam; an illumination apparatus that is configured to illuminate a part of the object at least with a second light in a wavelength range that is different from a wavelength range of a first light emitted from an irradiated part of the object that is irradiated with the energy beam; a detection apparatus that is configured to detect a light from a part of the object; and a display apparatus that is configured to display, based on an output from the detection apparatus, an image based on the first light from the irradiated part and an image related to the object illuminated with the second light.

A fifth aspect provides a processing system including: an irradiation apparatus that is configured to emit an energy beam; an illumination apparatus that is configured to perform an illumination with a second light in a wavelength range that is different from a wavelength range of a first light emitted from an irradiated part of the object that is irradiated with the energy beam; and an light reception part that is configured to optically receive a light from a part of an area that is illuminated by the illumination apparatus at least.

A sixth aspect provides a processing system including: a processing apparatus that is configured to process an object by irradiating the object with an energy beam; an illumination apparatus that is configured to illuminate a part of the object at least with a second light in a wavelength range that is different from a wavelength range of a first light emitted from an irradiated part of the object that is irradiated with the energy beam; and a detection apparatus that is configured to detect a light from a part of the object, the processing apparatus being configured to process the object based on an information that is related to the object illuminated with the second light and that is detected by the detection apparatus.

A seventh aspect provides a processing system including: a processing apparatus that is configured to process an object by irradiating the object with an energy beam; an illumination apparatus that is configured to illuminate a part of the object at least with a second light in a wavelength range that is different from a wavelength range of a first light emitted from an irradiated part of the object that is irradiated with the energy beam; and a detection apparatus that is configured to detect a light from a part of the object, the processing apparatus being configured to process the object based on an information that is based on the first light from the irradiated part detected by the detection apparatus and an information related to the object that is illuminated with the second light.

A eighth aspect provides a processing system including: a processing apparatus including an irradiation part that is configured to irradiate an object with an energy beam and a powder supply part that is configured to supply powder to a melt pool formed by an irradiation of the energy beam; an illumination apparatus that is configured to illuminate a part of a solidified part where the melt pool is solidified at least with a second light in a wavelength range that is different from a wavelength range of a first light emitted from the melt pool; a filter member that allows at least a part of the first light and at least a part of a third light from a part of the solidified part that is illuminated with the second light to pass therethrough; an imaging apparatus that is configured to optically receive at least a part of the first light and at least a part of the third light that have passed through the filter member; and a display apparatus that is configured to display, based on an output of the imaging apparatus, an image related to the melt pool and the solidified part, a transmittance of the filter member with respect to the first light being lower than a transmittance of the filter member with respect to the third light.

A ninth aspect provides a processing system including: a processing apparatus including an irradiation part that is configured to irradiate an object with an energy beam and a powder supply part that is configured to supply powder to a melt pool formed by an irradiation of the energy beam; an illumination apparatus that is configured to illuminate a part of a solidified part where the melt pool is solidified at least with a second light in a wavelength range that is different from a wavelength range of a first light emitted from the melt pool; an imaging apparatus that is configured to optically receive at least a part of the first light and at least a part of a third light from a part of the solidified part that is illuminated with the second light; and a processing control apparatus that is configured to control the processing apparatus based on an output of the imaging apparatus, the processing control apparatus being configured to set a target value of a size of the melt pool based on an optical received result of the third light, the processing control apparatus being configured to control the processing apparatus to process the object by forming the melt pool having a size that is equal to the set target value based on an optical received result of the first light.

A tenth aspect provides a processing system including: a processing apparatus including an irradiation part that is configured to irradiate an object with an energy beam and a powder supply part that is configured to supply powder to a melt pool formed by an irradiation of the energy beam; an illumination apparatus that is configured to illuminate a part of a solidified part where the melt pool is solidified at least with a second light in a wavelength range that is different from a wavelength range of a first light emitted from the melt pool; an imaging apparatus that is configured to optically receive at least a part of the first light and at least a part of a third light from a part of the solidified part that is illuminated with the second light; and an illumination control apparatus that is configured to control the illumination apparatus based on an optical received result of the first light by the imaging apparatus, the illumination control apparatus being configured to control the illumination apparatus so that an intensity of the second light is higher as a brightness of an image part, which corresponds to the first light, of an image obtained from the output of the imaging apparatus is higher.

An operation and another advantage of the present invention will be apparent from an example embodiment described below.

### Brief Description of Drawings

[FIG. 1] FIG. 1 is a cross-sectional view that illustrates a configuration of a processing system in a present example embodiment.
[FIG. 2] FIG. 2 is a system configuration diagram that illustrates a system configuration of the processing system in the present example embodiment.
[FIG. 3] Each of FIG. 3A to FIG 3F is a cross-sectional view or a planar view that illustrates a relationship between a melt pool and an irradiated part that is irradiated with a processing light.
[FIG. 4] Each of FIG. 4A to FIG. 4B is a planar view that illustrates the relationship between the melt pool and the irradiated part that is irradiated with the processing light.
[FIG. 5] Each of FIG. 5A to FIG 5E is a cross-sectional view that illustrates an aspect in which a certain area on a workpiece is irradiated with the processing light and build materials are supplied thereto.
[FIG. 6] Each of FIG. 6A to FIG. 6C is a cross-sectional view that illustrates a process for forming a three-dimensional structural object.
[FIG. 7] FIG. 7 is a cross-sectional view that conceptionally illustrates an observation apparatus observing the workpiece by using a workpiece light and a melt pool light.
[FIG. 8] FIG. 8 illustrates a magnitude relationship between an intensity of the workpiece light and an intensity of the melt pool light.
[FIG. 9] FIG. 9 is a graph that illustrates one example of a wavelength range of an illumination light.
[FIG. 10] FIG. 10 is a planar view that illustrates one example of an observation image captured by an imaging apparatus.
[FIG. 11] FIG. 11 is a graph that illustrates one example of the wavelength range of the illumination light.
[FIG. 12] FIG. 12 is a graph that illustrates a filtering characteristic of a filter member.
[FIG. 13] FIG. 13 is a graph that illustrates intensities of the illumination light and the melt pool light.
[FIG. 14] FIG. 14 is a planar view that illustrates the observation image displayed on a display.
[FIG. 15] Each of FIG. 15A to FIG. 15D is a planar view that illustrates an image displayed on the display.
[FIG. 16] FIG. 16 is a flowchart that illustrates a flow of one example of a condition set operation.
[FIG. 17] FIG. 17 is a planar view that illustrates one example of the observation image generated by the imaging apparatus.
[FIG. 18] FIG. 18 conceptionally illustrates an aspect in which a processing condition is set.
[FIG. 19] FIG. 19 is a flowchart that illustrates a flow of one example of a processing control operation.
[FIG. 20] FIG. 20 is a planar view that illustrates one example of an extracted melt pool image.
[FIG. 21] FIG. 21 is a planar view that illustrates one example of a workpiece image.
[FIG. 22] FIG. 22 is a planar view that illustrates one example of a workpiece image from which removed image part is removed.
[FIG. 23] FIG. 23 is a planar view that illustrates a reliability map.
[FIG. 24] FIG. 24 conceptionally illustrates an aspect in which the workpiece image is generated by using the reliability map.
[FIG. 25] Each of FIG. 25A and FIG. 25B is a graph that illustrates a relationship between a brightness of the melt pool image and the intensity of the illumination light.
[FIG. 26] Each of FIG. 26A and FIG. 26B is a graph that illustrates a relationship between a brightness of the workpiece image and the intensity of the illumination light.
[FIG. 27] FIG. 27 is a planar view that illustrates the observation image generated in a third modified example.
[FIG. 28] FIG. 28A is a cross-sectional view that illustrates an illumination apparatus that emits the illumination light from a first direction and FIG. 28B is a cross-sectional view that illustrates the illumination apparatus that emits the illumination light from a second direction.
[FIG. 29] FIG. 29A is a cross-sectional view that illustrates the illumination apparatus that emits the illumination light from a first direction and FIG. 29B is a cross-sectional view that illustrates the illumination apparatus that emits the illumination light from a second direction.
[FIG. 30] FIG. 30A is a cross-sectional view that illustrates a first illumination apparatus that emits the illumination light and FIG. 30B is a cross-sectional view that illustrates a second illumination apparatus that emits the illumination light.

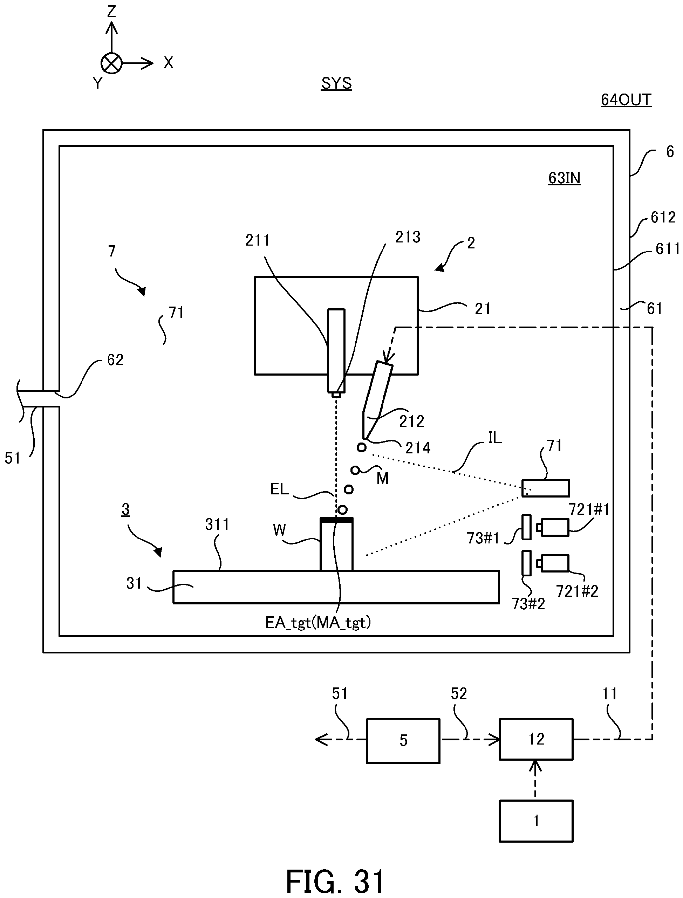

[FIG. 31] FIG. 31 is a cross-sectional view that illustrates a configuration of a processing system in a fifth modified example.
[FIG. 32] FIG. 32 is a cross-sectional view that illustrates a configuration of a processing system in a sixth modified example.

### Description of Embodiments

Next, with reference to drawings, an example embodiment of a processing system will be described. In the below described description, the example embodiment of the processing system will be described by using a processing system SYS that is configured to perform an additive processing on a workpiece W that is one example of an object. Especially, in the below described description, the example embodiment of the processing system will be described by using the processing system SYS that is configured to perform the additive processing based on a LMD (Laser Metal Deposition). The additive processing based on the Laser Metal Deposition is an additive processing for forming a three-dimensional structural object ST that is integrated with the workpiece W or that is separable from the workpiece W by melting build materials M supplied to the workpiece W by a processing light EL (namely, an energy beam in a form of a light).

Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Configuration of Processing System SYS

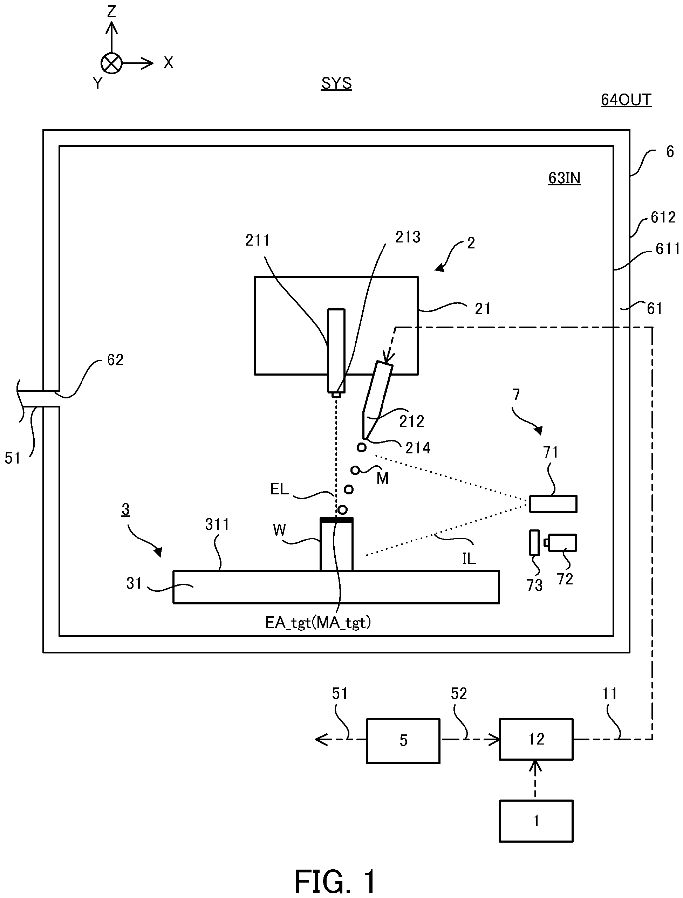

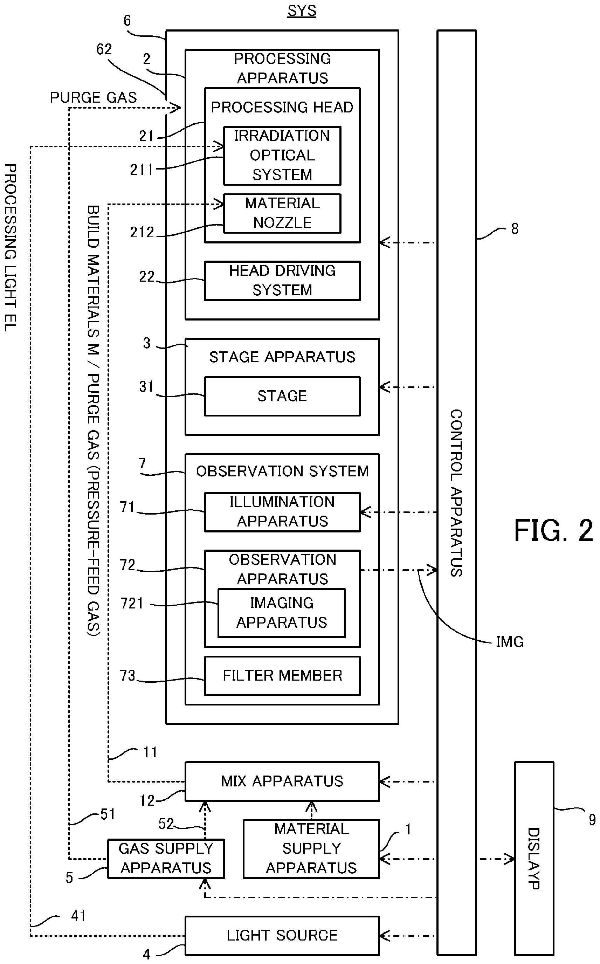

Firstly, with reference to FIG. 1 and FIG. 2, a configuration of the processing system SYS in the present example embodiment will be described. FIG. 1 is a cross-sectional view that illustrates one example of the configuration of the processing system SYS in the present example embodiment. FIG. 2 is a system configuration diagram that illustrates a system configuration of the processing system SYS in the present example embodiment.

The processing system SYS is configured to form the three-dimensional structural object ST (namely, a three-dimensional object (a solid object) having a size in each of three-dimensional directions). The processing system SYS is configured to form the three-dimensional structural object ST on the workpiece W that is a base for forming the three-dimensional structural object ST. The processing system SYS may be configured to form the three-dimensional structural object ST on the workpiece W by performing the additive processing on the workpiece W. When the workpiece W is a below described stage 31, the processing system SYS may be configured to form the three-dimensional structural object ST on the stage 31. When the workpiece W is an existing structural object held by the stage 31 (alternatively, placed on the stage 31), the processing system SYS may be configured to form the three-dimensional structural object ST on the existing structural object. In this case, the processing system SYS may form the three-dimensional structural object ST that is integrated with the existing structural object. An operation for forming the three-dimensional structural object ST that is integrated with the existing structural object may be regarded to be equivalent to an operation for adding a new structural object to the existing structural object. Note that the existing structural object may be an item that needs to be repaired having a missing part, for example. The processing system SYS may form the three-dimensional structural object on the item that needs to be repaired to fill in the missing part of the item that needs to be repaired. Alternatively, the processing system SYS may form the three-dimensional structural object ST that is separable from the existing structural object. Note that FIG. 1 illustrates an example in which the workpiece W is an existing structural object held by the stage 31. The below described description also uses the example in which the workpiece W is an existing structural object held by the stage 31.

As described above, the processing system SYS is configured to form the three-dimensional structural object ST by the Laser Metal Deposition. Namely, it can be said that the processing system SYS is a 3D printer that forms an object by using an Additive layer manufacturing technique. Note that the Additive layer manufacturing technique may be referred to as a Rapid Prototyping, a Rapid Manufacturing or an Additive Manufacturing.

In order to form the three-dimensional structural object ST, the processing system SYS includes a material supply apparatus 1, a processing apparatus 2, a stage apparatus 3, a light source 4, a gas supply apparatus 5, a housing 6, an observation system 7 and a control apparatus 8, as illustrated in FIG. 1 and FIG. 2. At least a part of the processing apparatus 2, the stage apparatus 3 and the observation system 7 is housed in a chamber space 63IN in the housing 6.

The material supply apparatus 1 is configured to supply the build materials M to the processing apparatus 2. Specifically, the material supply apparatus 1 is connected to the processing apparatus 2 (especially, a material nozzle 212 described later) through a supply pipe 11. The material supply apparatus 1 supplies the build materials M to the processing apparatus through the supply pipe 11. In this case, the material supply apparatus 1 may supply, to the processing apparatus 2, the build materials M the amount of which is necessary for the processing apparatus 2 to perform the additive processing per unit time by supplying the build materials M the amount of which is based on the necessary amount.

The build material M is a material that is molten by an irradiation of the processing light EL having a predetermined intensity or more intensity. At least one of a metal material and a resin material is usable as the build material M, for example. However, another material that is different from the metal material and the resin material may be used as the build material M. The build materials M are powder-like materials. Namely, the build materials M are powdery materials. The powdery materials may include not only the powder-like materials but also grain-like materials. The build materials M may include the powdery material a particle size of which is within a range of 90 micrometer ± 40 micrometer, for example. An average particle size of the powdery materials included in the build materials M may be 75 micrometer, may be within a range from 10 micrometer to 25 micrometer, or may be another size, for example. However, the build materials M may not be the powdery materials, and wired-like build materials or gas-like build materials may be used, for example.

The processing apparatus 2 is configured to form the three-dimensional structural object ST by using the build materials M supplied from the material supply apparatus 1. In order to form the three-dimensional structural object ST by using the build materials M, the processing apparatus 2 includes a processing head 21 and a head driving system 22. Moreover, the processing head 21 includes an irradiation optical system 211 and a material nozzle 212 (namely, a supply system or a supply apparatus that is configured to supply the build materials M). The processing head 21 and the head driving system 22 are housed in the chamber space 63IN. However, at least a part of the processing head 21 and / or the head driving system 22 may be disposed in an external space 64OUT that is a space at the outside of the housing 6. Note that the external space 64OUT may be a space in which an operator of the processing system SYS is allowed to enter.

The irradiation optical system 211 is an optical system (for example, a condensing optical system) for emitting the processing light EL from an emitting part 213. Specifically, the irradiation optical system 211 is optically connected to the light source 4 that generates the processing light EL through a light transmitting member 41 such as an optical fiber and light pipe. The irradiation optical system 211 emits the processing light EL transmitted from the light source 4 through the light transmitting member 41. The irradiation optical system 211 emits the processing light EL so that the processing light EL propagates in the chamber space 63IN. The irradiation optical system 211 emits the processing light EL in a downward direction (namely, toward a -Z side) from the irradiation optical system 211. The stage 31 is disposed below the irradiation optical system 211. When the workpiece W is placed on the stage 31, the irradiation optical system 211 emits the processing light EL toward the workpiece W. Specifically, the irradiation optical system 211 is configured to irradiate a target irradiation area EA_tgt, which is set on the workpiece W or near the workpiece W as an area that is irradiated with the processing light EL (typically, in which the light is condensed), with the processing light EL. Moreover, a state of the irradiation optical system 211 is switchable between a state where the target irradiation area EA tgt is irradiated with the processing light EL and a state where the target irradiation area EA tgt is not irradiated with the processing light EL under the control of the control apparatus 8. Note that a direction of the processing light EL emitted from the irradiation optical system 211 is not limited to a direct downward direction (namely, coincident with the -Z axis direction), and may be a direction that is inclined with respect to the Z axis by a predetermined angle, for example.

The material nozzle 212 has a supply outlet 214. The material nozzle 212 is configured to supply (specifically, inject, jet, blow out or spray) the build materials M from the supply outlet 214. The material nozzle 212 is physically connected to the material supply apparatus 1, which is a supply source of the build materials M, through a supply pipe 11 and a mix apparatus 12. The material nozzle 212 supplies the build materials M supplied from the material supply apparatus 1 through the supply pipe 11 and the mix apparatus 12. The material nozzle 212 may pressure-feed the build materials M supplied from the material supply apparatus 1 through the supply pipe 11. Namely, the build materials M from the material supply apparatus 1 and a gas for feeding (namely, a pressure-feed gas, and an inert gas such as a Nitrogen or an Argon, for example) may be mixed by the mix apparatus 12 and then pressure-fed to the material nozzle 212 through the supply pipe 11. As a result, the material nozzle 212 supplies the build materials M together with the gas for feeding. A purge gas supplied from the gas supply apparatus 5 is used as the gas for feeding, for example. However, a gas supplied from a gas supply apparatus that is different from the gas supply apparatus 5 may be used as the gas for feeding, for example. Note that the material nozzle 212 is illustrated to have a tube-like shape in FIG. 1, however, a shape of the material nozzle 212 is not limited to this shape. The material nozzle 212 supplies the build materials M toward the chamber space 63IN. The material nozzle 212 supplies the build materials M in a downward direction (namely, toward the -Z side) from the material nozzle 212. The stage 31 is disposed below the material nozzle 212. When the workpiece W is placed on the stage 31, the material nozzle 212 supplies the build materials M toward the workpiece W or a vicinity of the workpiece W. Note that a supply direction of the build materials M supplied from the material nozzle 212 is a direction that is inclined with respect to the Z axis by a predetermined angle (as one example, an acute angle), however, it may be the -Z axis direction (namely, a direct downward direction).

In the present example embodiment, the material nozzle 212 is aligned to the irradiation optical system 211 so as to supply the build materials M to the target irradiation area EA tgt that is irradiated with the processing light EL by the irradiation optical system 211. Namely, the material nozzle 212 is aligned to the irradiation optical system 211 so that the target irradiation area EA_tgt is coincident with (alternatively, at least partially overlaps with) a target supply area MA tgt that is set on the workpiece W as an area to which the material nozzle 212 supplies the build materials M. Note that he material nozzle 212 may be aligned to the irradiation optical system 211 so that the material nozzle 212 supplies the build materials M to a melt pool MP (described below) that is formed by the processing light EL emitted from the irradiation optical system 211.

The head driving system 22 is configured to move the processing head 21. For example, the head driving system 22 moves the processing head 21in the chamber space 63IN, for example. The head driving system 22 moves the processing head 21 along at least one of the X axis, the Y axis and the Z axis. When the processing head 21 moves along at least one of the X axis and the Y axis, each of the target irradiation area EA_tgt and the target supply area MA tgt moves on the workpiece W or at any position in the chamber space 63IN along at least one of the X axis and the Y axis. Furthermore, the head driving system 22 may move the processing head 21 along a rotational direction that includes at least one of the θX direction, the θY direction and the θZ direction, in addition to or instead of at least one of the X axis, the Y axis and the Z axis. In other words, the head driving system 22 may rotate the processing head 21 around at least one of the X axis, the Y axis and the Z axis. The head driving system 22 may change an attitude of the processing head 21 around at least one of the X axis, the Y axis and the Z axis. The head driving system 22 includes an actuator such as a motor, for example.

When the head driving system 22 moves the processing head 21, a relative position between the processing head 21 and each of the stage 31 and the workpiece W supported by the stage 31 changes. Namely, a relative position between each of the irradiation optical system 211 and the material nozzle 212 (the supply outlet 214) and each of the stage 31 and the workpiece W changes. Thus, the head driving system 22 may serve as a position change apparatus that is configured to change a relative positional relationship between each of the irradiation optical system 211 and the material nozzle 212 (the supply outlet 214) and each of the stage 31 and the workpiece W. Furthermore, when the relative position between the processing head 21 and each of the stage 31 and the workpiece W changes, a relative position between the target irradiation area EA _tgt of the processing light EL emitted from the processing head 21 and each of the stage 31 and the workpiece W changes. Thus, the head driving system 22 may serve as a position change apparatus that is configured to change a relative positional relationship between the target irradiation area EA_tgt and each of the stage 31 and the workpiece W. Furthermore, when the relative position between the processing head 21 and each of the stage 31 and the workpiece W changes, the target irradiation area EA tgt and the target supply area MA tgt (furthermore, the melt pool MP) relatively moves relative to the workpiece W. Thus, the head driving system 22 may serve as a movement apparatus that is configured to relatively moves the target irradiation area EA tgt and the target supply area MA tgt (furthermore, the melt pool MP) relative to the workpiece W.

The stage apparatus 3 includes the stage 31. The stage 31 is housed in the chamber space 63IN. The stage 31 is configured to support the workpiece W. Note that a state where "the stage 31 supports the workpiece W" here may mean a state where the workpiece W is directly or indirectly supported by the stage 31. The stage 31 may be configured to hold the workpiece W. Namely, the stage 31 may support the workpiece W by holding the workpiece W. Alternatively, the stage 31 may not be configured to hold the workpiece W. In this case, the workpiece W may be placed on the stage 31. Namely, the stage 31 may support the workpiece W placed on the stage 31. In this case, the workpiece W may be placed on the stage 31 without a clamp. Since the stage 31 is housed in the chamber space 63IN, the workpiece W supported by the stage 31 is also housed in the chamber space 63IN. Moreover, the stage 31 may be configured to release the held workpiece W, when the workpiece W is held. The above described irradiation optical system 211 emits the processing light EL in at least a part of a period when the stage 31 supports the workpiece W. Note that the stage 31 may include a mechanical chuck, a vacuum chuck and the like in order to hold the workpiece W.

The light source 4 is configured to emit an infrared light as the processing light EL, for example. However, a light having other wavelength, (for example, at least one of a visible light and a ultraviolet light) may be used as the processing light EL. The processing light EL includes a laser light. In this case, the light source 4 may include a laser light source such as a semiconductor laser. At least one of a Laser Diode (LD)), a fiber laser, a CO₂ laser, a YAG laser, an Excimer laser and the like is one example of the laser light source. However, the processing light EL may not be the laser light and the light source 4 may include any light source (for example, at least one of a LED (Light Emitting Diode), a discharge lamp and the like).

The gas supply apparatus 5 is a supply source of a purge gas for purging the chamber space 63IN. The purge gas includes inert gas. The Nitrogen gas or Argon gas is one example of the inert gas. The gas supply apparatus 5 is connected to the chamber space 63IN through a supply port 62 formed at a wall member 61 of the housing 6 and a supply pipe 51 that connects the gas supply apparatus 5 and the supply port 62. The gas supply apparatus 5 supplies the purge gas to the chamber space 63IN through the supply pipe 51 and the supply port 62. As a result, the chamber space 63IN is a space that is purged by the purge gas. The purge gas supplied to the chamber space 63IN may be discharged from a non-illustrated discharge port formed at the wall member 61. Note that the gas supply apparatus 5 may be a tank that stores the inert gas such as the Nitrogen gas or the Argon gas. When the purge gas is the Nitrogen gas, the gas supply apparatus 5 may be a Nitrogen gas generation apparatus that generates the Nitrogen gas by using air as material.

The purge gas supplied to the chamber space 63IN may have a flow velocity above the melt pool MP Namely, the purge gas may flow above the melt pool MP In this case, a substance such as a fume generated from the melt pool MP (moreover, an irradiation position of the processing light EL, and the target irradiation area EA_tgt) may be removed from a space above the melt pool MP by the purge gas. As a result, the irradiation of the processing light EL is not prevented by the substance such as the fume. Note that a supply port for supplying the purge gas flowing above the melt pool MP may be formed separately from the supply port 62. In this case, the supply port for supplying the purge gas flowing above the melt pool MP may be formed near the target irradiation area EA_tgt.

When the material nozzle 212 supplies the build materials M together with the purge gas, the gas supply apparatus 5 may supply the purge gas to the mix apparatus 12 to which the build materials M are supplied from the material supply apparatus 1, in addition to the chamber space 63IN. Specifically, the gas supply apparatus 5 may be connected to the mix apparatus 12 through a supply pipe 52 that connects the gas supply apparatus 5 and the mix apparatus 12. As a result, the gas supply apparatus 5 supplies the purge gas to the mix apparatus 12 through the supply pipe 52. In this case, the build materials M from the material supply apparatus 1 may be supplied (specifically, pressure-fed) to the material nozzle 212 through the supply pipe 11 by the purge gas supplied from the gas supply apparatus 5 through the supply pipe 52. Namely, the gas supply apparatus 5 may be connected to the material nozzle 212 through the supply pipe 52, the mix apparatus 12 and the supply pipe 11. In this case, the material nozzle 212 supplies, from the supply outlet 214, the build materials M together with the purge gas for pressure-feeding the build materials M.

The housing 6 is a housing apparatus that is configured to house at least a part of each of at least the processing apparatus 2, the stage apparatus 3 and the observation system 7 in the chamber space 63IN that is an internal space of the housing 6. The housing 6 includes the wall member 61 that forms the chamber space 63IN. The wall member 61 is a member that separates the chamber space 63IN from the external space 64OUT at the outside of the housing 6. The wall member 61 faces the chamber space 63IN through its inner wall 611 and faces the external space 64OUT through its outer wall 612. In this case, a space surrounded by the wall member 61 (more specifically, a space surrounded by the inner wall 611 of the wall member 61) is the chamber space 63IN. Note that an openable and closable door may be disposed at the wall member 61. The door may be opened when the workpiece W is to be placed on the stage 31. The door may be opened when the workpiece W and / or a build object is unloaded from the stage 31. The door may be closed during the processing (namely, during the additive processing or during a bonding processing). Note that an observation window (not illustrated) for visually observing the chamber space 63IN from the external space 64OUT of the housing 6 may be disposed at the wall member 61.

The observation system 7 is a system for observing an observation target object. In the present example embodiment, the observation target object includes the workpiece W. Moreover, in the present example embodiment, the three-dimensional structural object ST is formed on the workpiece W. Thus, the observation target object may include the three-dimensional structural object ST formed on the workpiece W. Moreover, in the present example embodiment, the three-dimensional structural object ST is formed by sequentially forming build objects such as structural layers SL as described later. Thus, the observation target object may include the workpiece W on which the build object for forming the three-dimensional structural object ST is formed (namely, the workpiece W on which the partially formed three-dimensional structural object ST is formed. Therefore, in the below described description, the workpiece W that is the observation target object includes not only the workpiece W itself but also the build object (typically, at least one of the three-dimensional structural object ST and the structural layer SL) formed on the workpiece W, for convenience of the description. Note that the observation target object may include an object other than the workpiece W. For example, the observation target object may include the stage 31. For example, the observation target object may include the irradiation optical system 211. For example, the observation target object may include the material nozzle 212. For example, the observation target object may include the housing 6.

In order to observe the workpiece W, the observation system 7 includes an illumination apparatus 71, an observation apparatus 72 and a filter member 73.

The illumination apparatus 71 is configured to emit an illumination light IL. The illumination apparatus 71 is configured to irradiate the observation target object with the emitted illumination light IL. As a result, the observation target object is illuminated with the illumination light IL. Namely, the illumination apparatus 71 is an apparatus that is configured to illuminate the observation target object with the illumination light IL. In the present example embodiment, the observation target object includes the workpiece W processed by the processing apparatus 2. In this case, the illumination apparatus 71 may illuminate at least a part of the workpiece W with the illumination light IL. The illumination apparatus 71 may illuminate a part of the workpiece W that is irradiated with the processing light EL (namely, a part on which the build object is formed by the additive processing) with the illumination light IL. The illumination apparatus 71 may illuminate a part of the workpiece W that is not irradiated with the processing light EL (namely, a part on which the build object is not formed by the additive processing) with the illumination light IL. The illumination apparatus 71 may illuminate a part of the workpiece W that is not yet irradiated with the processing light EL but is expected to be irradiated with the processing light EL in the future (namely, a part on which the build object is not yet formed but the build object is expected to be formed in the future by the additive processing) with the illumination light IL. The illumination apparatus 71 may illuminate a part of the workpiece W that is not expected to be irradiated with the processing light EL (namely, a part on which the build object is not expected to be formed by the additive processing) with the illumination light IL. Incidentally, when the observation target object include the object (for example, the stage 31 and the like) other than the workpiece W, the illumination apparatus 71 may illuminate the object (for example, the stage 31 and the like) other than the workpiece W with the illumination light IL.

The observation apparatus 72 is configured to observe the observation target object. Specifically, the observation apparatus 72 observes the observation target object that is illuminated with the illumination light IL. Note that the observation apparatus 72 may observe the observation target object that is not illuminated with the illumination light IL. In the present example embodiment, the observation apparatus 72 detects a light from the observation target object in order to observe the observation target object. Thus, the observation apparatus 72 may be referred to as a detection apparatus.

For example, when the observation target object is illuminated with the illumination light IL, a light including at least one of a reflected light, a scattered light and a transmitted light of the illumination light IL is emitted from an area (typically, at least a part of the observation target object) that is irradiated with the illumination light IL. In the present example embodiment, since the observation target object includes the workpiece W, the light including at least one of the reflected light, the scattered light and the transmitted light of the illumination light IL from the observation target object may include at least one of the reflected light, the scattered light and the transmitted light of the illumination light IL from the workpiece W. The light including at least one of the reflected light, the scattered light and the transmitted light of the illumination light IL from the workpiece W may include at least one of the reflected light, the scattered light and the transmitted light of the illumination light IL from the workpiece W itself, and may include at least one of the reflected light, the scattered light and the transmitted light of the illumination light IL from the build object (for example, at least one of the three-dimensional structural object ST and the structural layer SL) formed on the workpiece W. Thus, in the below described description, the light including at least one of the reflected light, the scattered light and the transmitted light of the illumination light IL from the workpiece W that is the observation target object is referred to as a "workpiece light WL", for convenience of the description. The observation apparatus 72 may detect at least a part of the workpiece light WL from the workpiece W in order to observe the workpiece W.

For example, when the workpiece W is irradiated with the processing light EL, a light is sometimes emitted from a part of the workpiece that is irradiated with the processing light EL (namely, a part of the workpiece W on which the target irradiation area EA_tgt is set, and it may be referred to as an "irradiated part EA" in the below described description). For example, when the workpiece W is irradiated with the processing light EL, the melt pool MP is formed on the workpiece W as described later. Namely, the melt pool MP is formed on an area of the workpiece W including the irradiated part EA. The melt pool MP emits a light (in the below described description, it is referred to as a "melt pool light ML", for convenience of the description). Specifically, the melt pool MP is an aggregation of liquid metal that emits a light. The melt pool light ML may include a light caused by a thermal radiation (for example, a black radiation). In this case, the observation apparatus 72 may detect at least a part of the melt pool light ML in order to observe the workpiece W. Of course, the observation apparatus 72 may detect at least a part of a light from the irradiated part EA of the workpiece W that is irradiated with the processing light EL, in addition to or instead of the melt pool light ML, in order to observe the workpiece W.

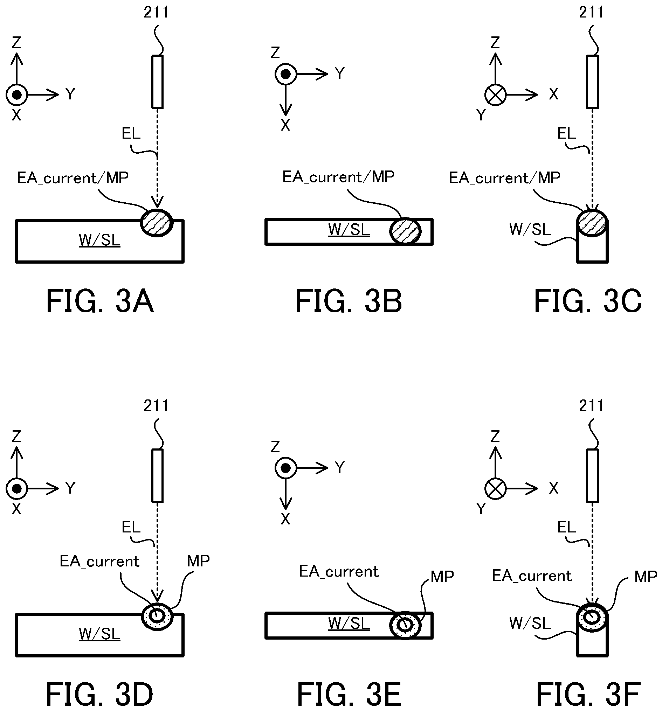

Here, as illustrated in each of FIG. 3A to FIG. 3C that illustrates a relationship between the irradiated part EA and the melt pool MP, a position of the irradiated part EA that is currently irradiated with the processing light EL (in the below described description, it is referred to as an "irradiated part EA current") may be same as a position of the melt pool MP In this case, a size of the irradiated part EA_current may be equal to a size of the melt pool MP Note that the "size" in the present example embodiment may include a one-dimensional size that corresponds to a width or a length along a predetermined direction (for example, a size in a direction along a build surface MS, and a size along at least one of the X axis direction and the Y axis direction). Moreover, the "size" may include a two-dimensional size that corresponds to an area size. Moreover, the "size" may include a three-dimensional size that corresponds to a cubic volume. Alternatively, the size of the irradiated part EA_current may be different from the size of the melt pool MP For example, as illustrated in each of FIG. 3D to FIG. 3F that illustrates a relationship between the irradiated part EA and the melt pool MP, the size of the irradiated part EA current may be smaller than the size of the melt pool MP Namely, the irradiated part EA current may be included in the melt pool MP. Note that FIG. 3A to FIG. 3F conceptionally illustrate the melt pool MP as a hatched area and conceptionally illustrate the irradiated part as an open area in order to prioritize a viewability of the drawings. Note that the position of the irradiated part EA_current may be different from the position of the melt pool MP, and the size of the irradiated part EA_current may be larger than the size of the melt pool MP.

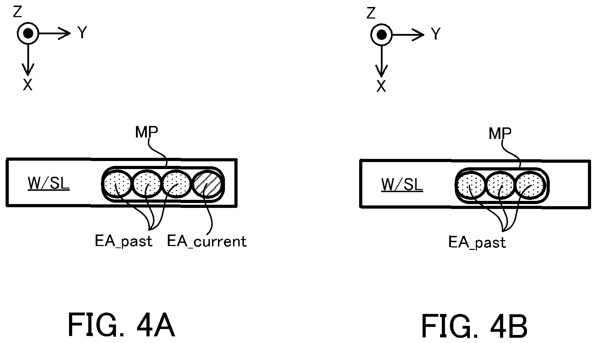

Moreover, when the head driving system 22 moves the processing head 21, the irradiated part that is irradiated with the processing light EL moves on the workpiece W. In this case, as illustrated in FIG. 4A that illustrates a relationship between the irradiated part EA and the melt pool MP, the melt pool MP may be formed on an area included in both of the irradiated part EA_current that is currently irradiated with the processing light EL and the irradiated part EA that is previously irradiated with the processing light EL (in the below described description, it is referred to as an "irradiated part EA_past"). In this case, the irradiated part EA emitting the light (especially, the melt pool light ML) detected by the observation apparatus 72 may include both of the irradiated part EA_current and the irradiated part EA_past. Alternatively, as illustrated in FIG. 4B that illustrates a relationship between the irradiated part EA and the melt pool MP, the melt pool MP may be formed on not the irradiated part EA_current but the irradiated part EA_past". In this case, the irradiated part EA emitting the light (especially, the melt pool light ML) detected by the observation apparatus 72 may include both of the irradiated part EA_current and the irradiated part EA_past. This situation may arise when the processing head 21 does not irradiate the workpiece W with the processing light EL. In this case, the irradiated part EA emitting the light (especially, the melt pool light ML) detected by the observation apparatus 72 may not include the irradiated part EA_current but may include the irradiated part EA_past.

Moreover, as illustrated in FIG. 3A to FIG. 3F, the present example embodiment describes an example in which the processing system SYS processes the workpiece W having such a shape that the Y axis direction is a longitudinal direction and the X axis direction is a short direction. Namely, the present example embodiment describes an example in which the processing system SYS processes the workpiece W a thickness of which is relatively thin along the X axis direction. However, the shape of the workpiece W processed by the processing system SYS is not limited. Namely, the processing system SYS may process the workpiece W having any shape.

Again in FIG. 1 and FIG. 2, in the present example embodiment, the observation apparatus 72 captures an image of the observation target object in order to observer the observation target object. Thus, the observation apparatus 72 includes an imaging apparatus 721. The imaging apparatus 721 is a camera, for example. The camera may be a general-purpose camera including an imaging element and a color filter (for example, a color filter in a Bayer arrangement). The imaging apparatus 721 generates the image of the observation target object (the workpiece W in the present example embodiment) by capturing the image of the observation target object (the workpiece W in the present example embodiment). In the below described description, the image generated by the imaging apparatus 721 is referred to as an "observation image IMG". The imaging apparatus 721 includes an imaging element (in other words, a reception element, and it may be referred to as a reception part) that is configured to detect at least a part of the light from the workpiece W (for example, at least one of the workpiece light WL caused by the illumination light IL and the melt pool light ML caused by the melt pool MP described above). The imaging element outputs the observation image IMG. Therefore, an observed result by the observation apparatus 72 (namely, a detected result of the light by the observation apparatus 72) may include the observation image IMG. The workpiece W is included in the observation image IMG, and thus, it can be said that the observation image IMG includes an information based on the workpiece W (especially, the workpiece W that is illuminated with the illumination light IL). Moreover, the observation image IMG is generated by detecting at least one of the workpiece light WL and the melt pool light ML, and thus, it can be said that the observation image IMG includes an information based on at least one of the workpiece light WL and the melt pool light ML

In an example illustrated in FIG. 1, the imaging apparatus 721 of the observation apparatus 72 is disposed so that an optical axis of an optical system of the imaging apparatus 721 is parallel to the short direction of the workpiece W (namely, the X axis direction). Moreover, the illumination apparatus 71 also illuminates the workpiece W with the illumination light IL from the short direction of the workpiece W (namely, the X axis direction). However, an arranged positions of the illumination apparatus 71 and the imaging apparatus 721 (namely, the observation apparatus 72) are not limited to the example illustrated in FIG. 1. The illumination apparatus 71 may be disposed at any position from which it is capable of illuminating the workpiece W with the illumination light IL. The imaging apparatus 721 may be disposed at any position from which it is capable of capturing the image of the workpiece W.

The observation apparatus 72 may include a single imaging apparatus 721. The observation apparatus 72 may include a plurality of imaging apparatuses 721. For example, the observation apparatus 72 may include a plurality of imaging apparatuses 721 that are from different directions, respectively, relative to the workpiece W. The plurality of imaging apparatuses 721 may constitute a stereo camera.

The filter member 73 is disposed between the observation target object (the workpiece W in the present example embodiment) and the observation apparatus 72. The observation apparatus 72 observes the observation target object through the filter member 73. Specifically, at least a part of the light from the workpiece W (for example, at least one of the workpiece light WL caused by the illumination light IL and the melt pool light ML caused by the melt pool MP described above) enters the observation apparatus 72 (especially, the imaging apparatus 721) through the filter member 73. The observation apparatus 72 detects the light from the workpiece W through the filter member 73.

The filter member 73 is a member that allows a light in at least a part of a wavelength range of the light from the workpiece W (for example, at least one of the workpiece light WL caused by the illumination light IL and the melt pool light ML caused by the melt pool MP described above) to pass therethrough. On the other hand, the filter member 73 is a member that reduces an intensity of or shields a light in a wavelength range that is different from a wavelength range of the light that is allowed to pass through the filter member 73. Specifically, the filter member 73 is a member that reduces the intensity of or shields the light in a wavelength range that is different from a wavelength range of the workpiece light WL and the wavelength range of the melt pool light ML Thus, the filter member 73 may serve as a band pass filter.

The control apparatus 8 is configured to control an operation of the processing system SYS. The control apparatus 8 may include an arithmetic apparatus and a storage apparatus. The arithmetic apparatus may include at least one of a CPU (Central Processing Unit) and a GPU (Graphic Processing Unit), for example. The storage apparatus may include a memory. Moreover, in the present example embodiment, the control apparatus 8 performs an arithmetic processing using the image (namely, an image processing) as described later. Thus, the arithmetic apparatus may include an image processing processor for performing the image processing, and the storage apparatus may include a buffer memory for the image processing (namely, a memory that temporarily stores the image on which the image processing is performed). In this case, the control apparatus 8 may perform the image processing by using the image processing processor and the buffer memory. Moreover, in the present example embodiment, a display 9 displays the image as described later. Thus, the control apparatus 8 may include a display controller for controlling the display 9, and the storage apparatus may include a buffer memory for displaying the image (namely, a memory that temporarily stores the displayed image, and a display RAM for example).

The control apparatus 8 serves as an apparatus for controlling the operation of the processing system SYS by means of the arithmetic apparatus executing a computer program. The computer program is a computer program that allows the arithmetic apparatus to execute (namely, to perform) a below described operation that should be executed by the control apparatus 8. Namely, the computer program is a computer program that allows the control apparatus 8 to function so as to make the processing system SYS execute the below described operation. The computer program executed by the arithmetic apparatus may be recorded in the storage apparatus (namely, a recording medium) of the control apparatus 8, or may be recorded in any recording medium (for example, a hard disk or a semiconductor memory) that is built in the control apparatus 8 or that is attachable to the control apparatus 8. Alternatively, the arithmetic apparatus may download the computer program that should be executed from an apparatus disposed at the outside of the control apparatus 8 through a network interface.

For example, the control apparatus 8 may control an emitting aspect of the processing light EL by the irradiation optical system 211. The emitting aspect may include at least one of an intensity of the processing light EL and an emitting timing of the processing light EL, for example. When the processing light EL is a pulse light, the emitting aspect may include at least one of an ON time of the pulse light, an emission cycle of the pulse light and a ratio (what we call a duty ratio) of a length of the ON time of the pulse light and a length of the emission cycle of the pulse light, for example. Moreover, the control apparatus 8 may control a moving aspect of the processing head 21 by the head driving system 22. The moving aspect may include at least one of a moving distance, a moving speed, a moving direction and a moving timing, for example. Moreover, the control apparatus 8 may control a supply aspect of the build materials M by the material nozzle 212. The supply aspect of the build materials M by the material nozzle 212 is mainly determined by the supply aspect of the build materials M by the material supply apparatus 1. Thus, controlling the supply aspect of the build materials M by the material supply apparatus 1 may be regarded to be equivalent to controlling the supply aspect of the build materials M by the material nozzle 212. The supply aspect may include at least one of the supplied amount (especially, the supplied amount per unit time) and a supply timing.

Especially in the present example embodiment, the control apparatus 8 may control the operation of the processing system SYS based on the observed result by the observation system 7 (namely, the observed result by the observation apparatus 72, an output of the observation apparatus 72, and a detected result of the light from the workpiece W by the observation apparatus 72). Namely, the control apparatus 8 may control the operation of the processing system SYS based on the observation image IMG captured by the imaging apparatus 721. For example, the control apparatus 8 may control the processing apparatus 2 based on the observation image IMG. Note that a detail of an operation for controlling the processing system SYS based on the observation image IMG will be described later in detail.

The control apparatus 8 may not be disposed in the processing system SYS. For example, the control apparatus 8 may be disposed at the outside of the processing system SYS as a server or the like. In this case, the control apparatus 8 may be connected to the processing system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 8 and the processing system SYS may be configured to transmit and receive various information through the network. Moreover, the control apparatus 8 may be configured to transmit an information such as a command and a control parameter to the processing system SYS through the network. The processing system SYS may include a reception apparatus that is configured to receive the information such as the command and the control parameter from the control apparatus 8 through the network. The processing system SYS may include a transmission apparatus that is configured to transmit the information such as the command and the control parameter to the control apparatus 8 through the network (namely, an output apparatus that is configured to output an information to the control apparatus 8). Alternatively, a first control apparatus that is configured to perform a part of the arithmetic processing performed by the control apparatus 8 may be disposed in the processing system SYS and a second control apparatus that is configured to perform another part of the arithmetic processing performed by the control apparatus 8 may be disposed at an outside of the processing system SYS

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 8 may include. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 8 by means of the control apparatus 8 (namely, a computer) executing the computer program, may be realized by a hardware such as a predetermined gate array (a FPGA, an ASIC) of the control apparatus 8, or may be realized in a form in which the logical process block and a partial hardware module that realizes an partial element of the hardware are combined.

The display 9 is a display apparatus that is configured to display a desired image under the control of the control apparatus 8. In the present example embodiment, the display 9 may display, based on the observed result by the observation system 7 (namely, the output of the observation apparatus 72, and the output of the imaging apparatus 721), the image. The display 9 may display the image that is based on the observed result by the observation system 7 (namely, the output of the observation apparatus 72, and the output of the imaging apparatus 721) (namely, the image related to the observed result). The display 9 may display the image related to the observed result by the observation system 7 (namely, the output of the observation apparatus 72, and the output of the imaging apparatus 721). Note that a specific example of the image displayed by the display 9 will be described later in detail.

The display 9 may include a display of the processing system SYS (namely, a display that is built into the processing system SYS). The display 9 may include a display attachable to the processing system SYS. Alternatively, a display of an apparatus that is different from the processing system SYS may display the desired image under the control of the control apparatus 8. For example, a display of at least one of a laptop computer and a tablet terminal may display the desired image under the control of the control apparatus 8. In this case, the processing system SYS may not include the display 9.

### (2) Operation of Processing system SYS

Next, an operation of the processing system SYS will be described. As described above, the processing system SYS performs an operation for forming the three-dimensional structural object ST by performing the additive processing on the workpiece W (in the below described description, it is referred to as an "additive processing operation"). The observation system 7 may perform an operation for observing the workpiece W (in the below described description, it is referred to as an "observation operation") in at least a part of a period during which the additive processing operation is performed. Incidentally, in the present example embodiment, the observation operation for observing the workpiece W includes an operation for detecting the light from the workpiece W. furthermore, the control apparatus 8 may perform an operation for controlling the processing system SYS by using a result of the observation operation (namely, the observed result of the workpiece W) (in the below described description, it is referred to as a "control operation") in at least a part of the period during which the additive processing operation is performed. Thus, in the below described description, the additive processing operation, the observation operation and the control operation will be described in order.

### (2-1) Additive Processing Operation

Firstly, the additive processing operation (namely, the operation for forming the three-dimensional structural object ST by performing the additive processing on the workpiece W) will be described. As described above, the processing system SYS forms the three-dimensional structural object ST by the Laser Metal Deposition. Thus, the processing system SYS may form the three-dimensional structural object ST by performing an existing additive processing operation (a build operation in this case) based on the Laser Metal Deposition. Next, one example of the additive processing operation of forming the three-dimensional structural object ST by using the Laser Metal Deposition will be briefly described.

The processing system SYS forms the three-dimensional structural object ST on the workpiece W based on a three-dimensional model data or the like (for example, a CAD (Computer Aided Design) data) of the three-dimensional structural object ST that should be formed. A measured data of the solid object measured by at least one of a non-illustrated measurement apparatus disposed in the processing system SYS and a three-dimensional shape measurement device disposed separately from the processing system SYS may be used as the three-dimensional model data. The processing system SYS sequentially forms a plurality of layered partial structural objects (it is referred to as the "structural layer" in the below described description) SL that are arranged along the Z axis direction in order to form the three-dimensional structural object ST, for example. For example, the processing system SYS forms, one by one, the plurality of structural layers SL that are obtained by slicing the three-dimensional structural object ST along the Z axis direction. As a result, the three-dimensional structural object ST that is a layered structural body in which the plurality of structural layers SL are layered is formed. Next, a flow of an operation for forming the three-dimensional structural object ST by forming the plurality of structural layers SL one by one in sequence will be described.

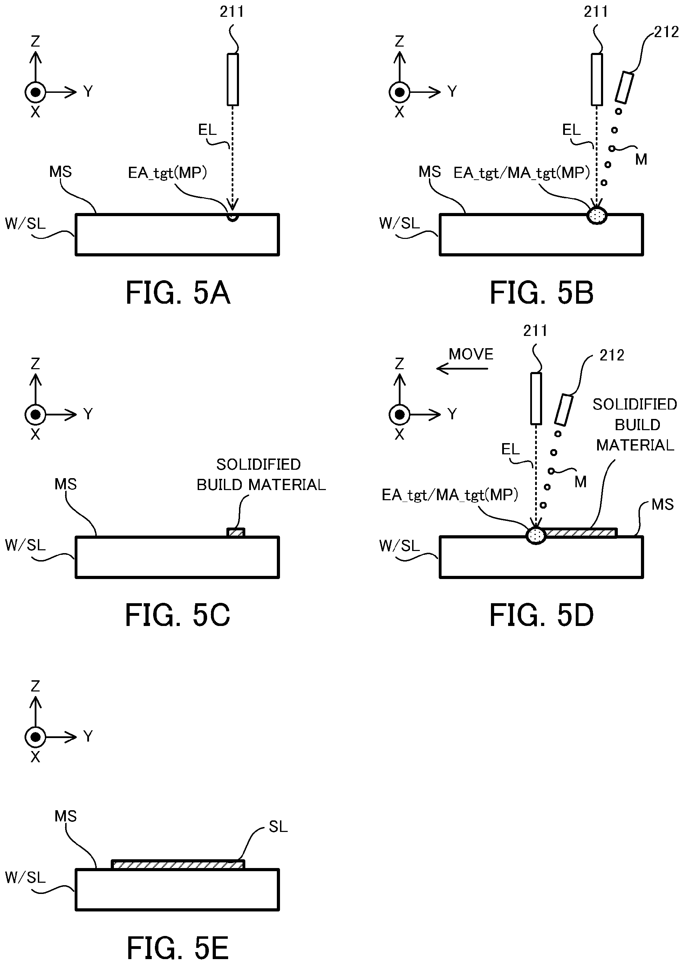

Firstly, with reference to FIG. 5A to FIG. 5E, an operation for forming each structural layer SL will be described. The processing system SYS moves the processing head 21 so that the target irradiation area EA tgt is set at a desired area on a build surface MS that corresponds to a surface of the workpiece W or a surface of the formed structural layer SL, under the control of the control apparatus 8. Then, the processing system SYS emits the processing light EL from the irradiation optical system 211 to the target irradiation area EA tgt. In this case, a light concentration position (namely, a condensed position) of the processing light EL may be located on the build surface MS. As a result, as illustrated in FIG. 5A, the melt pool (namely, a pool of a metal molten by the processing light EL) MP is formed at the irradiated part EA' on the build surface MS that is irradiated with the processing light EL. Moreover, the processing system SYS supplies the build materials M from the material nozzle 212 under the control of the control apparatus 8. Here, since the target irradiation area EA_tgt is coincident with the target supply area MA tgt as described above, the target supply area MA tgt includes at least a part of an area at which the melt pool MP is formed. Thus, the processing system SYS supplies the build materials M to the melt pool MP from the material nozzle 212, as illustrated in FIG. 5B. As a result, the build materials M supplied to the melt pool MP are molten. Then, when the melt pool MP is not irradiated with the processing light EL due to the movement of the processing head 21, the build materials M molten in the melt pool MP are cooled and solidified (namely, coagulated). As a result, as illustrated in FIG. 5C, the solidified build materials M are deposited on the build surface MS. Namely, a build object is formed by a deposition of the solidified build materials M.

A series of build process including the formation of the melt pool MP by the irradiation of the processing light EL, the supply of the build materials M to the melt pool MP, the melting of the supplied build materials M and the solidification of the molten build materials M is repeated while relatively moving the processing head 21 relative to the build surface MS along the XY plane, as illustrated in FIG. 5D. Namely, when the processing head 21 relatively moves relative to the build surface MS, the target irradiation area EA tgt also relatively moves relative to the build surface MS. Therefore, the series of build process is repeated while relatively moving the target irradiation area EA_tgt relative to the build surface MS along the XY plane (namely, in a two-dimensional plane). In this case, the processing system SYS sets the target irradiation area EA_tgt at an area on the build surface MS on which the build object should be formed and does not set the target irradiation area EA tgt at an area on the build surface MS on which the build object should not be formed. Thus, the area on the build surface MS on which the build object should be formed is irradiated with the processing light EL and the area on the build surface MS on which the build object should not be formed is not irradiated with the processing light EL. Namely, the processing system SYS moves the target irradiation area EA tgt along a predetermined moving trajectory on the build surface MS and irradiates the build surface MS with the processing light EL at a timing based on an aspect of a distribution of the area on which the build object should be formed. As a result, the melt pool MP also moves on the build surface MS along a moving trajectory based on the moving trajectory of the target irradiation area EA tgt. Specifically, the melt pool MP is formed in series at a part that is irradiated with the processing light EL in the area along the moving trajectory of the target irradiation area EA tgt on the build surface MS. Moreover, since the target irradiation area EA_tgt is coincident with the target supply area MA_tgt as described above, the target supply area MA tgt also moves on the build surface MS along a moving trajectory based on the moving trajectory of the target irradiation area EA_tgt. As a result, as illustrated in FIG. 5E, the structural layer SL that is an aggregation of the build object of the build materials M, which are solidified after being molten, is formed on the build surface MS. Namely, the structural layer SL that is an aggregation of the build object formed in a pattern based on the moving trajectory of the melt pool MP on the build surface MS (namely, the structural layer SL having a shape based on the moving trajectory of the melt pool MP in a planar view) is formed. Incidentally, when the target irradiation area EA _tgt is set at the area on which the build object should not be formed, the processing system SYS may irradiate the target irradiation area EA tgt with the processing light EL and stop the supply of the build materials M. Moreover, when the target irradiation area EA tgt is set at the area on which the build object should not be formed, the processing system SYS may supply the build materials M to the target irradiation area EA tgt and irradiate the target irradiation area EA tgt with the processing light EL having an intensity by which the melt pool MP is not formed.

Incidentally, in the above described description, the processing system SYS moves the target irradiation area EA _tgt relative to the build surface MS by moving the processing head 21 relative to the build surface MS. However, the processing system SYS may move the target irradiation area EA _tgt relative to the build surface MS by moving the stage 31 (namely, moving the build surface MS) relative to the processing head 21, in addition to or instead of moving the processing head 21 relative to the build surface MS. In this case, the stage apparatus may include a stage driving system that is configured to move the stage 31. Moreover, moreover, the processing system SYS may move the target irradiation area EA_tgt relative to the build surface MS by driving a Galvano mirror of the irradiation optical system 211.

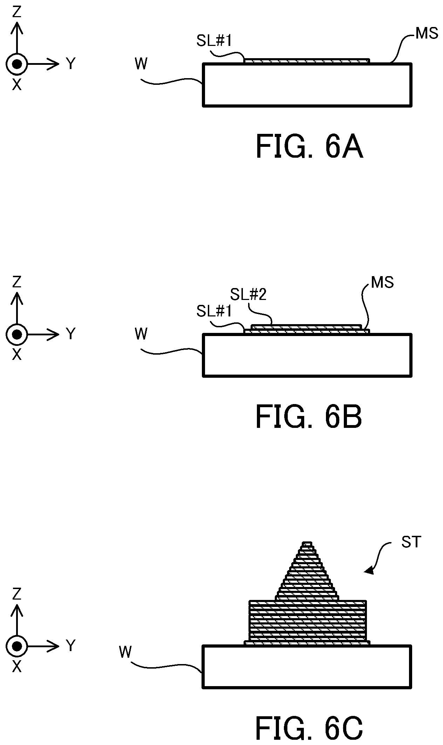

The processing system SYS repeats the operation for forming the structural layer SL based on the three-dimensional model data under the control of the control apparatus 8. Specifically, the control apparatus 8 firstly generates slice data by performing a slicing process on the three-dimensional model data by a layer pitch. The slice data includes data defining a detail of a processing process for forming the plurality of structural layers SL (namely, the processing process including a series of the build process described above). Note that data obtained by modifying a part of the slice data based on a characteristic of the processing system SYS may be used. The processing system SYS performs a process for forming the first structural layer SL#1 on the build surface MS that corresponds to the surface of the workpiece W based on the three-dimensional model data corresponding to the structural layer SL#1 (namely, the slice data corresponding to the structural layer SL#1). As a result, as illustrated in FIG. 6A, the structural layer SL#1 is formed on the build surface MS. Then, the processing system SYS sets the surface (namely, an upper surface) of the structural layer SL#1 to be a new build surface MS and forms a second structural layer SL#2 on the new build surface MS. In order to form the structural layer SL#2, firstly, the control apparatus 8 controls the head driving system 22 so that the processing head 21 moves along the Z axis direction. Specifically, the control apparatus 8 controls the head driving system 22 to move the processing head 21 toward the +Z axis side so that the target irradiation area EA_tgt and the target supply area MA_tgt are set on the surface of the structural layer SL#1 (namely, the new build surface MS). By this, the light concentration position of the processing light EL is on the new build surface MS. Then, the processing system SYS performs a process for forming the structural layer SL#2 on the structural layer SL#1 based on the slice data corresponding to the structural layer SL#2, as with the process for forming the structural layer SL#1 under the control of the control apparatus 8. As a result, as illustrated in FIG. 6B, the structural layer SL#2 is formed. Then, the same process is repeated until all structural layers SL constituting the three-dimensional structural object ST that should be formed on the workpiece W are formed. As a result, the three-dimensional structural object ST is formed by a layered structural object in which the plurality of structural layers SL are layered, as illustrated in FIG. 6C.

### (2-2) Observation Operation

Next, the observation operation for observing the workpiece W will be described. In the present example embodiment, observing the workpiece W includes observing both of the workpiece W and the melt pool MP formed on the workpiece W. This is because the control apparatus 8 controls the processing system SYS in the below described control operation by using both of an information obtained from the observed result of the workpiece W (for example, an information related to a characteristic of the workpiece W) and an information obtained from an observed result of the melt pool MP (for example, an information related to a characteristic of the melt pool MP). However, when the illumination apparatus 71 described in the present example embodiment is not used, there is a possibility that such a technical problem arises that it is difficult to properly observe both of the workpiece W and the melt pool MP Thus, in the below described description, the technical problem that it is difficult to properly observe both of the workpiece W and the melt pool MP will be described. Then, the observation operation performed by the observation system 7 in the present example embodiment will be described to describe how the observation system 7 solve this technical problem.

### (2-2-1) Technical Problem possibly arising when Workpiece W and Melt Pool MP are observed

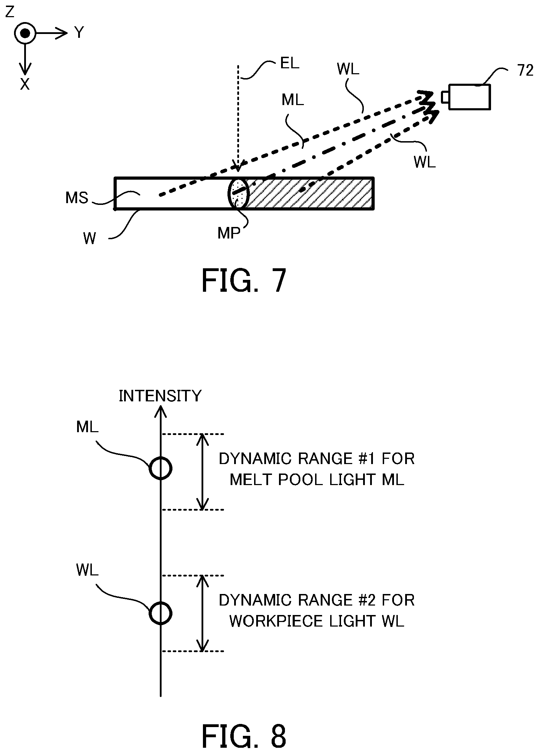

Firstly, with reference to FIG. 7 and FIG. 8, the technical problem that possibly arises when an observation system in a comparison example, which does not use the illumination apparatus 71 observes the workpiece W and the melt pool MP will be described. FIG. 7 is a cross-sectional view that conceptionally illustrates the observation apparatus 72 observing the workpiece W by using the workpiece light WL and the melt pool light ML FIG. 8 illustrates a magnitude relationship between an intensity of the workpiece light WL and an intensity of the melt pool light ML Note that the below described description uses the intensities of the workpiece light WL and the melt pool light ML, however, this description may be applied to a case where brightness of the workpiece light WL and the melt pool light ML are used.

As illustrated in FIG. 7, the observation apparatus 72 of the observation system in the comparison example observes the workpiece W by detecting the workpiece light WL and the melt pool light ML However, since the e observation system in the comparison example does not use the illumination apparatus 71, the workpiece light WL is mainly a light from the workpiece W that is irradiated with the melt pool light ML from the melt pool MP (alternatively, an ambient light). Namely, the workpiece light WL mainly includes at least one of a reflected light, a scattered light and a transmitted light of the melt pool light ML emitted from the melt pool MP (alternatively, an ambient light). Here, as illustrated in FIG. 8, there is a high possibility that the intensity (typically, an intensity at a peak wavelength described later) of the melt pool light ML is much higher than the intensity of the workpiece light WL. This is because the melt pool light ML is a light emitted from the pool of the molten metal and the workpiece light WL is merely the light including at least one of a reflected light, a scattered light and a transmitted light of the light with which the workpiece W is irradiated.

When the intensity of the melt pool light ML is much higher than the intensity of the workpiece light WL, an exposure condition of the imaging apparatus 721 is often set so that the exposure condition is appropriate to either one range of the workpiece light WL and the melt pool light ML In this case, a dynamic range of the imaging apparatus 721 (namely, a range between a minimum value and a maximum value of a light signal that is identifiable and detectable by the imaging apparatus 721) varies depending on the exposure condition of the imaging apparatus 721. As a result, there is a possibility that the imaging apparatus 721 is not capable of generating the observation image IMG in which both of the workpiece W and the melt pool MP are properly included. Namely, there is a possibility that the observation system in the comparison example is not capable of properly observing both of the workpiece W and the melt pool MP

For example, a dynamic range #1 in FIG. 8 is a dynamic range when the image of the workpiece W is captured in a state where the exposure is optimized for a range of the intensity of the melt pool light ML In this case, the imaging apparatus 721 is capable of properly detecting the melt pool light ML, and thus, the observation image IMG in which the melt pool MP is properly included is generated. On the other hand, since the intensity of the workpiece light WL is much lower than the intensity of the melt pool light ML, it is difficult of the imaging apparatus 721 to detect the workpiece light WL. As a result, there is a possibility that the workpiece W (especially, a part of the workpiece W other than a part located near the melt pool MP) is not properly included in the generated observation image IMG. For example, there is a possibility that the workpiece W (especially, a part of the workpiece W other than a part located near the melt pool MP) is black in the generated observation image IMG.

On the other hand, for example, a dynamic range #2 in FIG. 8 is a dynamic range when the image of the workpiece W is captured in a state where the exposure is optimized for a range of the intensity of the workpiece light WL. In this case, the imaging apparatus 721 is capable of properly detecting the workpiece light WL, and thus, the observation image IMG in which the workpiece W is properly included is generated. On the other hand, there is a possibility that a part of the imaging element by optically receiving the melt pool light ML is saturated, and thus, there is a possibility that the melt pool MP (furthermore, a part of the workpiece W located near the melt pool MP) is not properly included in the generated observation image IMG. For example, there is a possibility that the melt pool MP (furthermore, a part of the workpiece W located near the melt pool MP) included in a white state in the generated observation image IMG. Namely, there is a possibility that the melt pool MP (furthermore, a part of the workpiece W located near the melt pool MP) is not included in an identifiable state in the generated observation image IMG.

As described above, if there is not countermeasure, there is a possibility that the observation system 7 is not capable of properly observing both of the workpiece W and the melt pool MP, even when it tries to observe both of the workpiece W and the melt pool MP Namely, there is a possibility that the observation system 7 is not capable of generating the observation image IMG in which both of the workpiece W and the melt pool MP are properly included. Thus, in the present example embodiment, the observation operation described later is performed in order to properly observe both of the workpiece W and the melt pool MP Namely, the observation system 7 performs the observation operation described later is performed in order to generate the observation image IMG in which both of the workpiece W and the melt pool MP are properly included.

### (2-2-2) Observation Operation for properly Observing both of Workpiece W and Melt Pool MP

In the present example embodiment, a wavelength range λrange_IL of the illumination light IL is set to be a proper wavelength range in order to properly observe both of the workpiece W and the melt pool MP Here, the "wavelength of a light" in the present example embodiment may mean "a range of the wavelength in which an intensity of the light is equal to or lower than a predetermined loser limit threshold value THL".

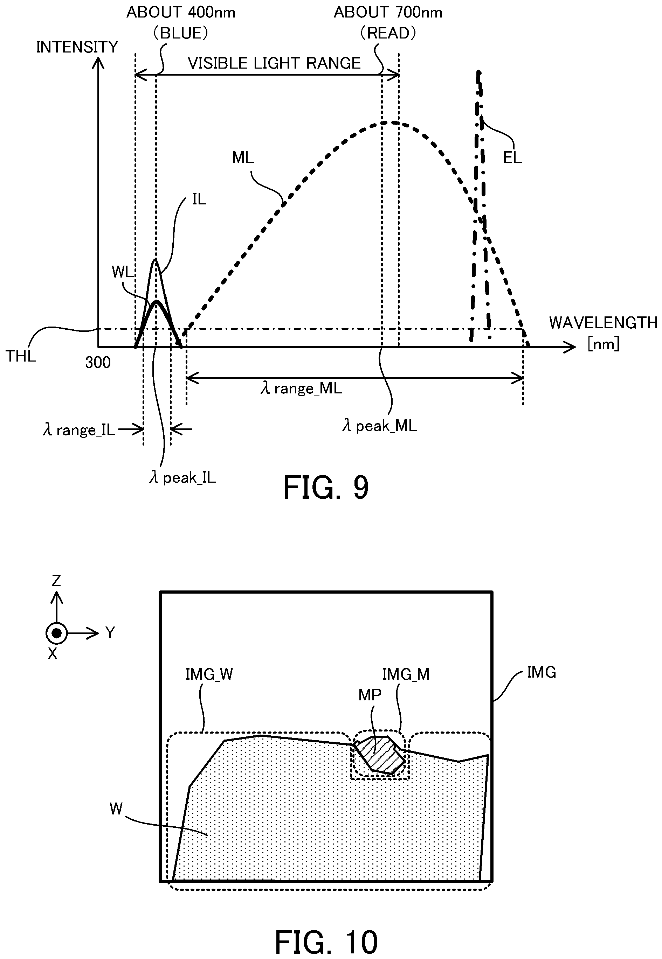

Specifically, as illustrated in FIG. 9 that is a graph illustrating one example of the wavelength range λrange_IL of the illumination light IL, the wavelength range λrange_IL of the illumination light IL is set to be a wavelength range that is different from a wavelength range λrange_ML of the melt pool light ML In this case, a wavelength range λrangeWL of the workpiece light WL is also a wavelength range that is different from the wavelength range λrange_ML of the melt pool light ML. As a result, as illustrated in FIG. 10 that is a planar view illustrating one example of the observation image IMG generated by the imaging apparatus 721, the melt pool MP having a color based on the wavelength range λrange_ML and the workpiece W having a color based on the wavelength range λrange_IL are included in the observation image IMG. Thus, both of the melt pool MP and the workpiece W (especially, a part of the workpiece W other than the melt pool MP) are included in the observation image IMG in a state where they are distinguishable from each other by their color. As a result, the control apparatus 8 described later is capable of extracted a workpiece image IMG_W corresponding to the workpiece W and a melt pool image IMG_M corresponding to the melt pool MP from the observation image IMG.

A state where "the wavelength range λrange_IL is different from the wavelength range λrange_ML" typically means a state where "the wavelength range λrange_IL does not overlap with the wavelength range λrange_ML". In this case, since the wavelength range λrangeIL does not overlap with the wavelength range λrange_ML, the wavelength range λrange_IL is typically set so that a peak wavelength λpeak_IL of the illumination light IL is a wavelength that is different from a peak wavelength λpeak_ML of the melt pool light ML. Note that "a peak wavelength of a light" in the present example embodiment may mean "a wavelength at which an intensity of the light is maximum".

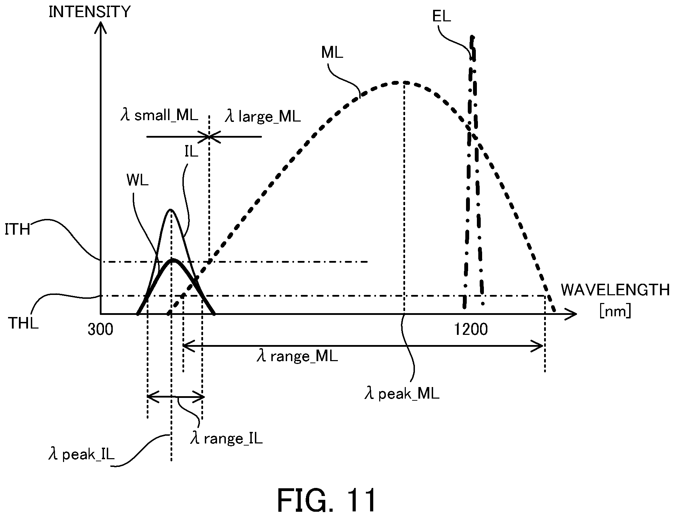

However, the state where "the wavelength range λrangeIL is different from the wavelength range λrange_ML" may include a state where "a part of the wavelength range λrange_IL does not overlap with the wavelength range λrange_ML and another part of the wavelength range λrange_IL overlaps with the wavelength range λrange_ML". Foe example, as illustrated in FIG. 11 that is a graph illustrating another example of the wavelength range λrange_IL of the illumination light IL, the wavelength range λrange_IL may be set so that the intensity of the illumination light IL is higher (especially, higher by a first predetermined intensity or more) than the intensity of the melt pool light ML at the peak wavelength λpeak_IL. Especially, the wavelength range λrange_IL may be set so that the intensity of the workpiece light WL from the workpiece W irradiated with the illumination light IL is higher (especially, higher by a second predetermined intensity or more) than the intensity of the melt pool light ML at the peak wavelength λpeak_IL. In this case, even when a part of the wavelength range λrange_IL overlaps with the wavelength range λrange_ML, the workpiece W having the color based on the wavelength range λrange_IL is included in the observation image IMG.

In order to set the wavelength range λrange_IL so that the intensity of the workpiece light WL is higher than the intensity of the melt pool light ML at the peak wavelength λpeak_IL, the wavelength range λrange_IL may be set so that the peak wavelength λpeak_IL is a wavelength λsmall_ML at which the intensity of the melt pool light ML is lower than a predetermined intensity ITH in the wavelength range λrange_ML. In other words, the wavelength range λrange_IL may be set so that the peak wavelength λpeak_IL is a wavelength that is different from a wavelength λlarge_ML at which the intensity of the melt pool light ML is higher than the predetermined intensity ITH in the wavelength range λrange_ML. The predetermined intensity ITH may be set to be a value that is smaller (especially, smaller by the first predetermined intensity) than the intensity of the illumination light IL at the peak wavelength λpeak_IL. The predetermined intensity ITH may be set to be a value that is smaller (especially, smaller by the second predetermined intensity) than the intensity of the workpiece light WL at the peak wavelength λpeak_IL.

The wavelength range λrange_IL may be set to be a wavelength range that is shorter than the wavelength range λrange_ML. One reason is to separate the wavelength range λrange_IL from a wavelength of the processing light EL, because the infrared light that is a light having a relatively long wavelength is used as the processing light EL in the present example embodiment. As a result, an influence of the processing light EL on the observation of the workpiece W is relatively small. An example illustrated in each of FIG. 9 and FIG. 11 illustrates an example in which the wavelength range λrange_IL is set to include a wavelength of a blue light of the visible light in a situation where the infrared light is used as the processing light EL and the peak wavelength λpeak_ML of the melt pool light ML corresponds to a wavelength of a red light of the visible light.

The wavelength range λrange_IL may be set to include at least a part of a wavelength range of the visible light. In this case, the workpiece W is included in the observation image IMG so that it is visible to a user of the processing system SYS. Thus, the user can properly recognize a state of the workpiece W from the observation image IMG. However, the wavelength range λrange_IL may not include the wavelength range of the visible light. The wavelength range λrange_IL may include at least a part of a wavelength range of a light that is different from the visible light. For example, the wavelength range λrange_IL may include at least one of a wavelength range of the ultraviolet light.

When the wavelength range λrange_IL is set to be the wavelength range that is different from the wavelength range λrange_ML as described above, the dynamic range of the imaging apparatus 721 may be set so that the range of the intensity of the workpiece light WL is properly exposed. However, when the intensity of the illumination light IL is lower (especially, lower by a predetermined first allowable value or more) than the intensity (for example, the intensity at the peak wavelength λpeak_ML) of the melt pool light ML, there is a possibility that the intensity of the workpiece light WL is lower (especially, lower by a predetermined second allowable value or more) than the intensity of the melt pool light ML As a result, there is a possibility that the above described technical problem due to the dynamic range still arises. Namely, there is a possibility that the melt pool MP (furthermore, a part of the workpiece W located near the melt pool MP) is not included in the identifiable state in the generated observation image IMG. Thus, in the present example embodiment, the observation system 7 may reduce a difference between the intensity of the workpiece light WL detected by the imaging apparatus 721 and the intensity of the melt pool light ML detected by the imaging apparatus 721 to be smaller than the second allowable value by using the filter member 73.

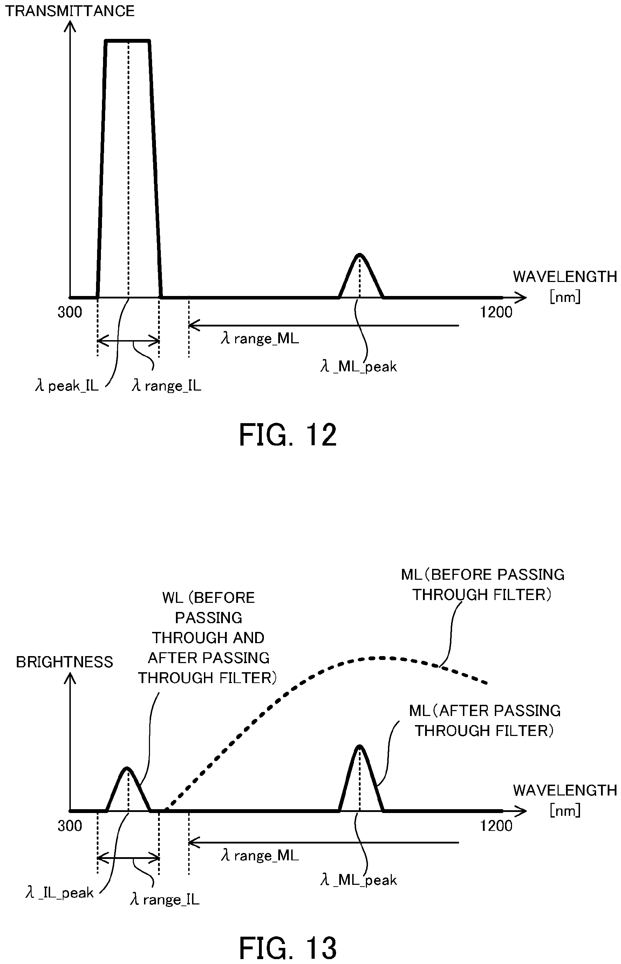

For example, as illustrated in FIG. 12 that is a graph illustrating a filtering characteristic of the filter member 73, the filter member 73 may have such a characteristic that a transmittance of the filter member 73 with respect to a light in the wavelength range λrange_IL of the illumination light IL is different from a transmittance of the filter member 73 with respect to a light in the wavelength range λrange_ML of the melt pool light ML Especially, the filter member 73 may have such a characteristic that the transmittance of the filter member 73 with respect to the light in the wavelength range λrangeML is lower than the transmittance of the filter member 73 with respect to the light in the wavelength range λrange_IL. As a result, as illustrated in FIG. 13 that is a graph illustrating intensities of the illumination light IL and the melt pool light ML, even when the intensity of the illumination light IL is lower (especially, lower by the predetermined first allowable value or more) than the intensity of the melt pool light ML, the difference between the intensity of the workpiece light WL and the intensity of the melt pool light ML is smaller than the second allowable value. Conversely, the transmittance of the filter member 73 may be set so that the difference between the intensity of the workpiece light WL and the intensity of the melt pool light ML is smaller than the second allowable value

Incidentally, the transmittance of the filter member 73 with respect to the light in the wavelength range λrange_IL is relatively high, and thus, FIG. 12 illustrates an example in which the intensity of the workpiece light WL that does not yet pass through the filter member 73 is equal to the intensity of the workpiece light WL that has passed through the filter member 73. However, depending on the filtering characteristic of the filter member 73, the intensity of the workpiece light WL that has passed through the filter member 73 may be lower than the intensity of the workpiece light WL that does not yet pass through the filter member 73.

As illustrated in FIG. 12, the filter member 73 may have such a characteristic that a light in a partial wavelength range of the wavelength range λrange_ML is allowed to pass therethrough and a light in another partial wavelength range of the wavelength range λrange_ML is not allowed to pass therethrough. For example, the filter member 73 may have such a characteristic that a light in a partial wavelength range including the peak wavelength λpeak_ML of the wavelength range λrange_ML is allowed to pass therethrough and a light in the other partial wavelength range of the wavelength range λrange_ML is not allowed to pass therethrough. In other words, the filter member 73 may have such a characteristic that a wavelength range of a light component, which is allowed to pass through the filter member 73, of the light included in the wavelength range λrange_ML (namely, a transmittance bandwidth) is relatively narrow. For example, the filter member 73 may have such a characteristic that the wavelength range of the light component, which is allowed to pass through the filter member 73, of the light included in the wavelength range λrange_ML (namely, the transmittance bandwidth) is relatively narrower than a wavelength range of a light component, which is allowed to pass through the filter member 73, of the light included in the wavelength range λrange_WL (namely, a transmittance bandwidth). In this case, even when the intensity of the melt pool light ML is much higher than the intensity of the illumination light IL, the difference between the intensity of the workpiece light WL and the intensity of the melt pool light ML is smaller than the second allowable value. Furthermore, even in this case, a partial light component of the melt pool light ML passes through the filter member 73, and thus, the fact remains that the melt pool MP is included in the observation image IMG. As a result, an effect that is same as an effect achievable when the transmittance of the filter member 73 with respect to the light in the wavelength range λrange_IL is different from the transmittance of the filter member 73 with respect to the light in the wavelength range λrange_ML is achievable. Furthermore, the melt pool light ML and the workpiece light WL optically received by the imaging apparatus 721 are optically separated from each other definitely, and thus, there is such an advantage that it is possible to perform the image processing and the like using the observation image IMG described later. Incidentally, when the wavelength range of the light component, which is allowed to pass through the filter member 73, of the light included in the wavelength range λrange_ML (namely, the transmittance bandwidth) is relatively narrow, the transmittance of the filter member 73 with respect to the light in the wavelength range λrange_IL may not be different from the transmittance of the filter member 73 with respect to the light in the wavelength range λrange_ML. Moreover, when both of the melt pool light ML and the workpiece light WL are the visible lights, even the imaging apparatus 721 including the general-purpose camera described above is capable of capturing the image of the workpiece W to generate the observation image in which the workpiece W and the melt pool MP are included.

The filtering characteristic of the filter member 73 may be set based on an experiment using the workpiece W (alternatively, a sample imitating the workpiece W). For example, the melt pool light ML from the melt pool MP formed by irradiating the workpiece W (alternatively, the sample imitating the workpiece W) with the processing light EL may be detected, the workpiece light WL generated by irradiating the workpiece W (alternatively, the sample imitating the workpiece W) with the illumination light IL may be detected, the intensities of the melt pool light ML and the workpiece light WL may be determined based on the detected results of the melt pool light ML and the workpiece light WL, and the filtering characteristic (for example, the transmittance and the like described above) of the filter member 73 may be set based on a determined result of the intensities of the melt pool light ML and the workpiece light WL.

However, when the intensity of the illumination light IL is not lower (especially, lower by the first allowable value or more) than the intensity (for example, the intensity at the peak wavelength λpeak_ML) of the melt pool light ML, the observation system 7 may not include the filter member 73. For example, when a difference between the intensity of the illumination light IL and the intensity (for example, the intensity at the peak wavelength λpeak_ML) of the melt pool light ML is smaller than the first allowable value, the observation system 7 may not include the filter member 73. Alternatively, even when the intensity of the illumination light IL is not lower (especially, lower by the first allowable value or more) than the intensity of the melt pool light ML, the observation system 7 may include the filter member 73. However, in this case, the transmittance of the filter member 73 with respect to the light in the wavelength range λrangeIL of the illumination light IL may not be different from the transmittance of the filter member 73 with respect to the light in the wavelength range λrange_ML of the melt pool light ML For example, the transmittance of the filter member 73 with respect to the light in the wavelength range λrange_IL of the illumination light IL may be equal to the transmittance of the filter member 73 with respect to the light in the wavelength range λrange_ML of the melt pool light ML. Moreover, in this case, the wavelength range of the light component, which is allowed to pass through the filter member 73, of the light included in the wavelength range λrange_ML (namely, the transmittance bandwidth) may not be relatively narrow

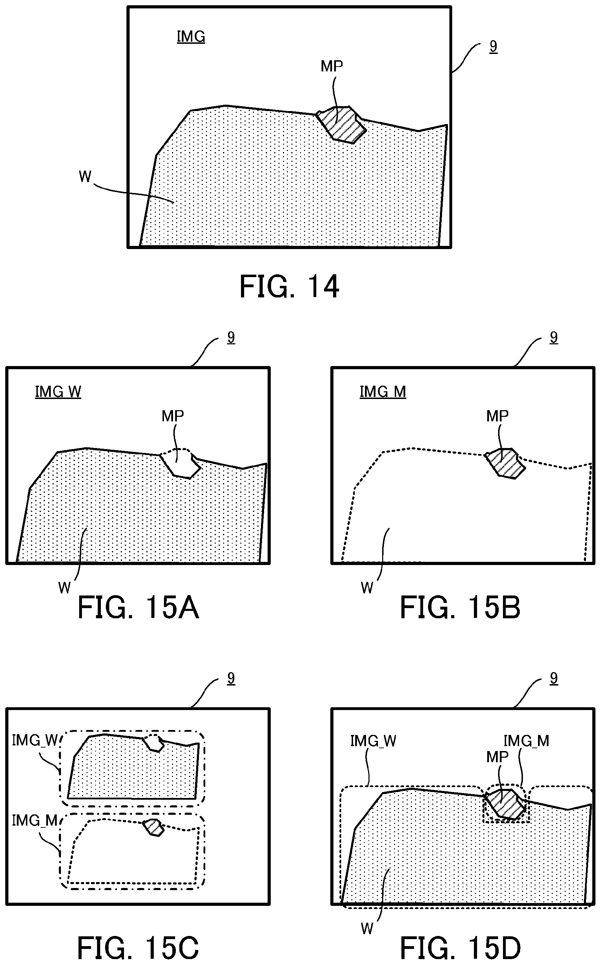

When the observation image IMG is generated by the observation operation, the display 9 may display the observation image IMG under the control of the control apparatus 8. Namely, as illustrated in FIG. 14 that illustrates the observation image IMG displayed on the display 9, the display 9 may display the observation image IMG in which both of the workpiece W having the color based on the wavelength range λrange_IL and the melt pool MP having the color based on the wavelength range λrange_ML are included. As a result, the user can properly recognize at least one of the state of the workpiece W and a state of the melt pool MP from the observation image IMG.

As described above, the control apparatus 8 may extract the workpiece image IMG_W and the melt pool image IMG_M from the observation image IMG. In this case, the display 9 may display either one of the workpiece image IMG_W and the melt pool image IMG_M and may not display the other one of the workpiece image IMG_W and the melt pool image IMG_M under the control of the control apparatus 8. Even in this case, the user can properly recognize either one of the state of the workpiece W and the state of the melt pool MP For example, as illustrated in FIG. 15A, the display 9 may display the workpiece image IMG_W and may not display the melt pool image IMG_M. For example, as illustrated in FIG. 15B, the display 9 may display the melt pool image IMG_M and may not display the workpiece image IMG_W. alternatively, the display 9 may display both of the workpiece image IMG_W and the melt pool image IMG_M under the control of the control apparatus 8. Even in this case, the user can properly recognize at least one of the state of the workpiece W and the state of the melt pool MP For example, as illustrated in FIG. 15C, the display 9 may display the workpiece image IMG_W and the melt pool image IMG_M side by side. For example, as illustrated in FIG. 15D, the display 9 may display the workpiece image IMG_W and the melt pool image IMG_M with them overlapped. In this case, the image displayed by the display 9 may be substantially same as the observation image IMG.

### (2-3) Control Operation

Next, the control operation for controlling the processing system SYS using the result of the observation operation will be described. In the below described description, the control operation including (i) a condition set operation for setting, by using the result of the observation operation (especially, the workpiece image WL), a processing condition for processing the workpiece W and (ii) a processing control operation for controlling, using the result of the observation operation (especially, the melt pool image ML), the processing system SYS to process the workpiece W using the set processing condition will be described.

Specifically, as described above, the processing system SYS forms the three-dimensional structural object ST by sequentially forming the plurality of structural layers SL. Here, the control apparatus 8 performs the condition set operation for setting, by using the workpiece image IMG_W in which a (n)-th structural layer SL#n already formed is included, the processing condition that is used to form a (n+1)-th structural layer SL#n+1 during a period when the (n (note that n is an integer that is equal to or larger than 1))-th structural layer SL#n is formed. Furthermore, the control apparatus 8 performs the processing control operation for controlling, by using the melt pool image IMG M, the processing system SYS to form the (n+1)-th structural layer SL#n+1 by using the processing condition set by the condition set operation during a period when the (n+1)-th structural layer SL#n+1 is formed. In this manner, the control apparatus 8 performs the condition set operation by mainly using the workpiece image IMG W and performs the processing control operation by mainly using the melt pool image IMG_M. Namely, the control apparatus 8 uses the workpiece image IMG_W and the melt pool image IMG_M obtained from the observation image IMG for different use applications, respectively. In the below described description, the condition set operation and the processing control operation will be described in order.

However, the control operation performed by the processing system SYS is not limited to the control operation described below. The control apparatus 8 may perform any first operation based on the workpiece image IMG_W. The control apparatus 8 may perform any second operation based on the melt pool image IMG_M. The control apparatus 8 may perform any control operation based on the workpiece image IMG_W and the melt pool image IMG_M. The control apparatus 8 may use the workpiece image IMG_W for any first use application, and may use the melt pool image IMG_M for any second use application. The control apparatus 8 may use the workpiece image IMG_W and the melt pool image IMG_M for same use application. Alternatively, the control apparatus 8 may perform the control operation using either one of the workpiece image IMG_W and the melt pool image IMG_M and may not perform the control operation using the other one of the workpiece image IMG W and the melt pool image IMG_M. Namely, the control apparatus 8 may perform the control operation by using either one of the workpiece image IMG_W and the melt pool image IMG_M without using the other one of the workpiece image IMG_W and the melt pool image IMG_M.

### (2-3-1) Condition Set Operation

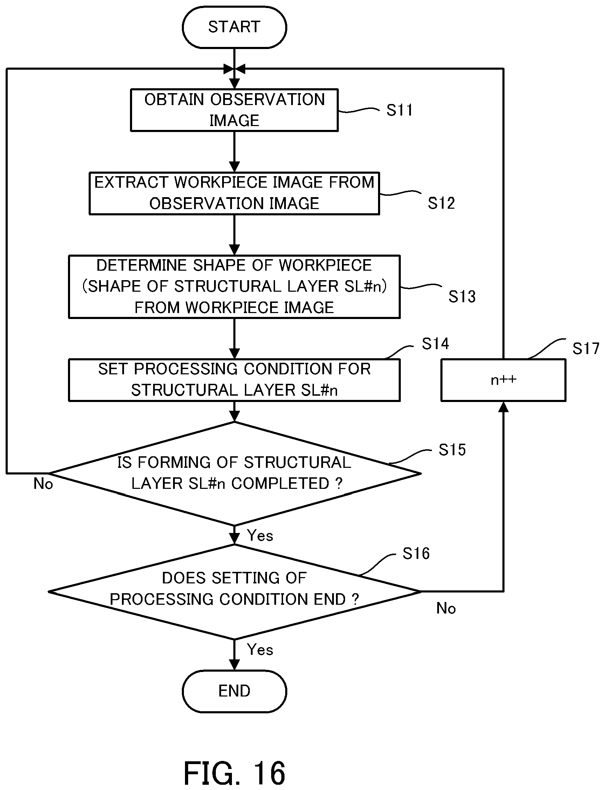

Firstly, with reference to FIG. 16, the condition set operation will be described. FIG. 16 is a flowchart that illustrates a flow of one example of the condition set operation. Note that the condition set operation illustrated in FIG. 16 is one example of the condition set operation that is performed in at least a part of a period when the (n)-th structural layer SL#n is formed by the above described additive processing operation.

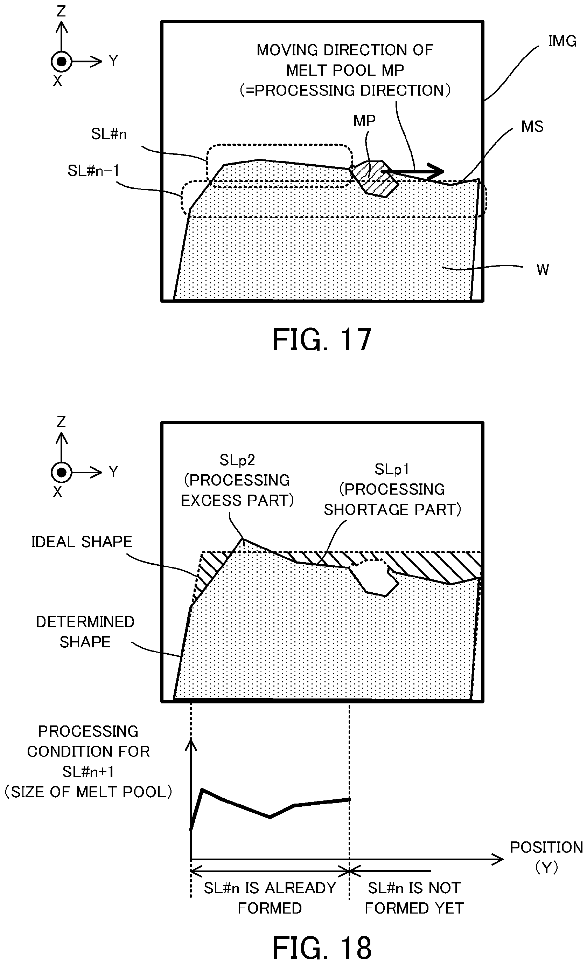

As illustrated in FIG. 16, the control apparatus 8 obtains the observation image IMG from the observation system 7 (especially, the imaging apparatus 721) (a step S11). FIG. 17 is a planar view that illustrates one example of the obtained observation image IMG. As illustrated in FIG. 17, the build surface MS is set on the surface of a (n-1)-th structural layer SL#n-1 in the period when the (n)-th structural layer SL#n is formed. Thus, the processing apparatus 2 forms the structural layer SL#n on the structural layer SL#n-1. Moreover, in an example illustrated in FIG. 17, the processing apparatus 2 forms the structural layer SL#n so that the melt pool MP moves relative to the workpiece W toward the +Y side. Thus, a part of the structural layer SL#n is already formed on a part of the build surface MS that is located at the -Y side than the melt pool MP and another part of the structural layer SL#n is not yet formed on a part of the build surface MS that is located at the +Y side than the melt pool MP Another part of the structural layer SL#n will be formed on a part of the build surface MS that is located at the +Y side than the melt pool MP

Then, the control apparatus 8 obtains the workpiece image IMG_W corresponding to the workpiece W from the observation image IMG obtained at the step S11 (a step S12). As described above, the melt pool MP having the color based on the wavelength range λrange_ML and the workpiece W (namely, the workpiece W itself and the build object formed on the workpiece W) having the color based on the wavelength range λrange_IL are included the observation image IMG. Thus, the control apparatus 8 may extract the workpiece image IMG_W corresponding to the workpiece W from the observation image IMG by analyzing the color of the observation image IMG. Namely, the control apparatus 8 may extract the workpiece image IMG_W (see FIG. 15A) corresponding to the workpiece light WL from the observation image IMG.

Then, the control apparatus 8 determines a shape (namely, a current or actual shape) of the workpiece W based on the workpiece image IMG_W extracted at the step S12 (a step S13). Especially, the control apparatus 8 determines a shape (namely, a current or actual shape) of the structural layer SL#n that is currently formed by the processing apparatus 2 (the step S13). For example, the control apparatus 8 may determine the shape of the surface of the structural layer SL#n that is currently formed by the processing apparatus 2.

Then, the control apparatus 8 set the processing condition that is used to form the structural layer SL#n+1 based on the shape of the workpiece W (especially, the shape of the structural layer #n) determined at the step S13 (a step S14). Specifically, as illustrated in FIG. 18 conceptionally illustrating an aspect in which the processing condition is set, the control apparatus 8 calculates a difference between the actual shape of the workpiece W (especially, the actual shape of the structural layer SL#n) determined at the step S13 and an ideal shape of the workpiece W (especially, an ideal shape of the structural layer SL#n) after the structural layer SL#n is formed. Then, the control apparatus 8 sets the processing condition that is used to form the structural layer SL#n+1 so that the difference between the actual shape of the workpiece W and the ideal shape of the workpiece W decreases by forming the structural layer SL#n+1.

For example, the difference between the actual shape of the workpiece W and the ideal shape of the workpiece W corresponds to a shortage amount or an excess amount of the actual formed amount of each part of the structural layer SL#n relative to an ideal formed amount (typically, an ideal thickness). When the formed amount of a first part (for example, a processing shortage part SLp1 illustrated in FIG. 18) of the structural layer SL#n is smaller than the ideal formed amount, the shape of the workpiece W is closer to the ideal shape by increasing the formed amount of a part of the structural layer SL#n+1, which is formed on the structural layer SL#n, formed on the processing shortage part SLp1. On the other hand, when the formed amount of a second part (for example, a processing excess part SLp2 illustrated in FIG. 18) of the structural layer SL#n is larger than the ideal formed amount, the shape of the workpiece W is closer to the ideal shape by decreasing the formed amount of a part of the structural layer SL#n+1, which is formed on the structural layer SL#n, formed on the processing excess part SLp2. Thus, the control apparatus 8 may set the processing condition for the structural layer SL#n+1 so that the formed amount of a part of the structural layer SL#n+1 formed on the processing shortage part SLp1 is relatively large and the formed amount of a part of the structural layer SL#n+1 formed on the processing excess part SLp2 is relatively small. For example, the control apparatus 8 may set the processing condition so that the formed amount of a part of the structural layer SL#n+1 formed on the processing shortage part SLp1 is larger as the shortage amount of the formed amount of the processing shortage part SLp1 relative to the ideal formed amount is larger. For example, the control apparatus 8 may set the processing condition so that the formed amount of a part of the structural layer SL#n+1 formed on the processing excess part SLp2 is smaller as the excess amount of the formed amount of the processing excess part SLp2 relative to the ideal formed amount is larger. Note that the formed amount may not limited to the thickness, and may be a width (as one example, a size along the X axis direction).

There is a possibility that the formed amount of each part of the structural layer SL#n+1 depends on a size of the melt pool MP formed on the build surface MS for forming each part of the structural layer SL#n+1, for example. For example, an amount of the build materials M molten in the melt pool MP is larger as the melt pool MP formed for forming each part of the structural layer SL#n+1 is larger, and thus, there is a possibility that the formed amount of each part of the structural layer SL#n+1 is larger. Thus, the processing condition may include the size of the melt pool MP (namely, a target value of the size of the melt pool MP) formed for forming the structural layer SL#n+1. Note that the size of the melt pool MP may include a size in a direction along the build surface MS (for example in a direction along the XY plane) (what we call a width). The size of the melt pool MP may include a size in a direction intersecting with the build surface MS (for example in the Z axis direction) (what we call a height or a depth). In this case, the control apparatus 8 may set the processing condition so that the melt pool MP for forming a part of the structural layer SL#n+1 formed on the processing shortage part SLp1 is larger as the shortage amount of the formed amount of the processing shortage part SLp1 relative to the ideal formed amount is larger, as illustrated in a lower part of FIG. 18. For example, the control apparatus 8 may set the processing condition so that the melt pool MP for forming a part of the structural layer SL#n+1 formed on the processing excess part SLp2 is smaller as the excess amount of the formed amount of the processing excess part SLp2 relative to the ideal formed amount is larger, as illustrated in a lower part of FIG. 18.

The processing system SYS may change the size of the melt pool MP by controlling the intensity of the processing light EL, for example. For example, the processing system SYS may increase the size of the melt pool MP by increasing the intensity of the processing light EL, for example. For example, the processing system SYS may decrease the size of the melt pool MP by decreasing the intensity of the processing light EL, for example.

There is a possibility that the formed amount of each part of the structural layer SL#n+1 depends on each of an irradiation time and the number of times of the irradiation of the processing light EL for forming each part of the structural layer SL#n+1. For example, the amount of the build materials M molten at each part is larger as the irradiation time of the processing light EL for forming each part of the structural layer SL#n+1 is longer, and thus, there is a possibility that the formed amount of each part of the structural layer SL#n+1 is larger. For example, the amount of the build materials M molten at each part is larger as the number of time of the irradiation of the processing light EL for forming each part of the structural layer SL#n+1 is larger, and thus, there is a possibility that the formed amount of each part of the structural layer SL#n+1 is larger. Thus, the processing condition may include at least one of the irradiation time and the number of times of the irradiation of the processing light EL (namely, a target value of at least one of the irradiation time and the number of times of the irradiation) for forming each part of the structural layer SL#n+1. For example, the control apparatus 8 may set the processing condition so that at least one of the irradiation time and the number of times of the irradiation of the processing light EL for forming a part of the structural layer SL#n+1 formed on the processing shortage part SLp1 is larger as the shortage amount of the formed amount of the processing shortage part SLp1 relative to the ideal formed amount is larger. For example, the control apparatus 8 may set the processing condition so that at least one of the irradiation time and the number of times of the irradiation of the processing light EL for forming a part of the structural layer SL#n+1 formed on the processing excess part SLp2 is smaller as the excess amount of the formed amount of the processing excess part SLp2 relative to the ideal formed amount is larger.

The processing system SYS may change the size of the melt pool MP by controlling the moving aspect of the processing head 11 by controlling at least one of the irradiation time and the number of times of the irradiation of the processing light EL on each area on the workpiece W. For example, the processing system SYS may control the number of times of the irradiation by controlling the moving trajectory of the processing head 11. For example, the processing system SYS may decrease the irradiation time of the processing light EL by increasing the moving speed of the processing head 11 in a period when each area on the workpiece W is irradiated with the processing light EL. For example, the processing system SYS may increase the irradiation time of the processing light EL by decreasing the moving speed of the processing head 11 in the period when each area on the workpiece W is irradiated with the processing light EL.

Incidentally, as illustrated in FIG. 18, when there is a non-formed part at which the structural layer SL#n is not formed (specifically, the non-formed part that is expected to be formed in an area at the +Y side than a part corresponding to the melt pool MP), the control apparatus 8 may not set the processing condition that is used to form the structural layer SL#n+1 on the non-formed part. The control apparatus 8 may set the processing condition that is used to form the structural layer SL#n+1 on the non-formed part after the non-formed part is formed. Thus, in the present example embodiment, it can be said that the control apparatus 8 sequentially sets a part of the processing condition for forming the structural layer SL#n+1 along with the formation of the structural layer SL#n. Namely, it can be said that the control apparatus 8 sets a part of the processing condition for forming the structural layer SL#n+1 so that the graph illustrating the processing condition illustrated in the lower part of FIG. 18 is gradually extended toward a right side along with the formation of the structural layer SL#n. However, as described later, the control apparatus 8 may sets whole of the processing condition for forming the structural layer SL#n+1 after whole of the structural layer SL#n is formed.

Then, the control apparatus 8 determines whether or not whole of the structural layer SL#n is already formed (a step S15). As a result of the determination at the step S15, when it is determined that a part of the structural layer SL#n is not yet formed (the step S15: No), the control apparatus 8 repeats the processes from the step S11 to the step S14.

On the other hand, as a result of the determination at the step S15, when it is determined that whole of the structural layer SL#n is already formed (the step S15: Yes), the control apparatus 8 determines whether or not setting the processing condition should be ended (a step S16). For example, when the structural layer SL#n+1 is formed following the structural layer SL#n, the control apparatus 8 may set the processing condition that is used to form a (n+2)-th structural layer SL#n+2 by using the workpiece image IMG_W in which the structural layer SL#n+1 already formed is included in a period when the structural layer SL#n+1 is formed. Therefore, when the structural layer SL#n+1 is formed following the structural layer SL#n, the control apparatus 8 may determine that setting the processing condition should not be ended. On the other hand, when the structural layer SL#n+1 is not formed following the structural layer SL#n, the control apparatus 8 may determine that setting the processing condition should be ended.

As a result of the determination at the step S16, when it is determined that setting the processing condition should not be ended (the step S16: No), the control apparatus 8 increments the variable number n by one (a step S17), and then repeats the processes from the step S11 to the step S15. On the other hand, when it is determined that setting the processing condition should be ended (the step S16: Yes), the control apparatus 8 ends the condition set operation illustrated in FIG. 16.

Incidentally, in the above described description, the control apparatus 8 sets the processing condition that is used to form the structural layer SL#n+1 by using the workpiece image IMG_W in which the structural layer SL#n already formed is included in the period when the structural layer SL#n is formed. However, the control apparatus 8 sets the processing condition that is used to form the structural layer SL#n+1 by using the workpiece image IMG_W in which the structural layer SL#n already formed is included after whole of the structural layer SL#n is formed. For example, after the processing apparatus 2 finishes forming the structural layer SL#n, the imaging apparatus 721 may capture the image of the structural layer SL#n already formed, and the control apparatus 8 may extract the workpiece image IMG_W from the observation image IMG captured by the imaging apparatus 721 and may set the processing condition that is used to form the structural layer SL#n+1 by using the extracted workpiece image IMG_W.

### (2-3-2) Processing Control Operation

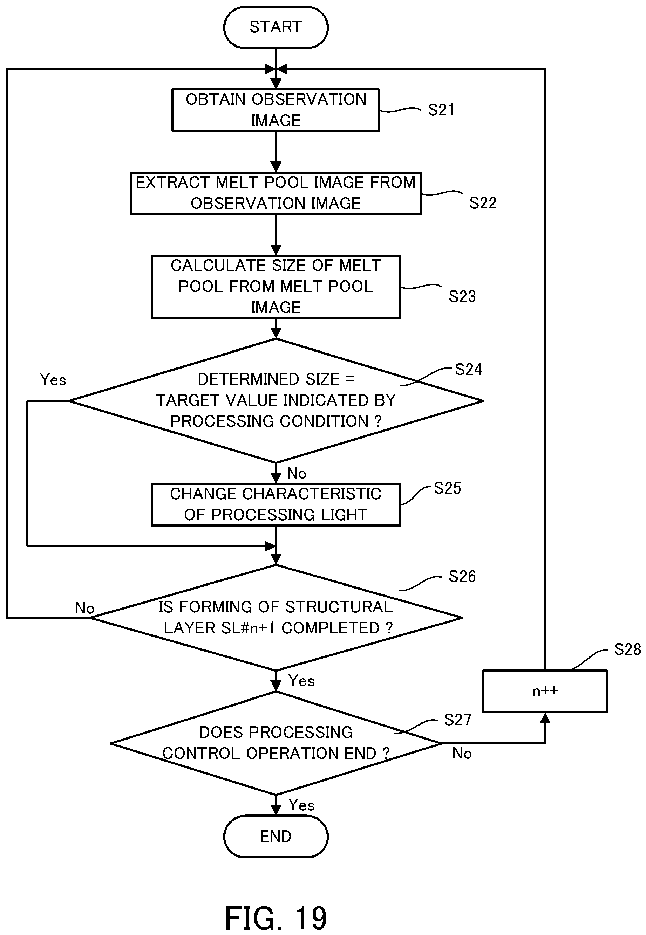

Next, with reference to FIG. 19, the processing control operation will be described. FIG. 19 is a flowchart that illustrates a flow of one example of the processing control operation.. Note that the condition set operation illustrated in FIG. 19 is one example of the condition set operation that is performed in at least a part of a period when the (n+1)-th structural layer SL#n+! is formed by the above described processing operation.

As illustrated in FIG. 19, the control apparatus 8 obtains the observation image IMG from the observation system 7 (especially, the imaging apparatus 721) (a step S21).

Then, the control apparatus 8 obtains the melt pool image IMG_M corresponding to the melt pool MP from the observation image IMG obtained at the step S21 (a step S22). As described above, the melt pool MP having the color based on the wavelength range λrange_ML and the workpiece W having the color based on the wavelength range λrange_IL are included the observation image IMG. The control apparatus 8 may extract the melt pool image IMG_M corresponding to the melt pool MP from the observation image IMG by analyzing the color of the observation image IMG. Namely, the control apparatus 8 may extract the melt pool image IMG_M (see FIG. 15B) corresponding to the melt pool light ML from the observation image IMG.

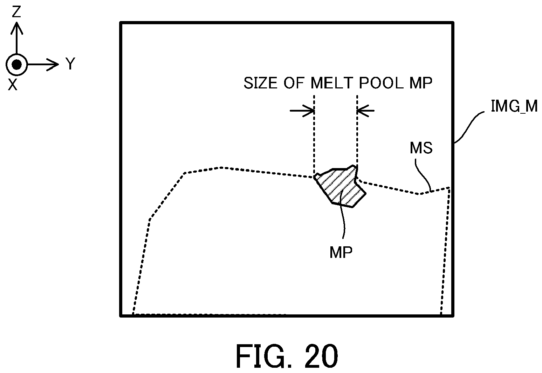

Then, the control apparatus 8 determines a shape of the melt pool MP based on the melt pool image IMG_M extracted at the step S22 (a step S23). For example, as illustrated in FIG. 20, the control apparatus 8 may determine the size in the direction along the build surface MS (for example, the direction along the XY plane) (what we call the width ). For example, as illustrated in FIG. 20, the control apparatus 8 may determine the size in the direction intersecting with the build surface MS (for example in the Z axis direction) (what we call the height or the depth).

Then, the control apparatus 8 determines whether or not the size of the melt pool MP determined at the step S23 is equal to the target value of the size of the melt pool MP indicated by the processing condition set by the condition set operation (a step S24).

As a result of the determination at the step S24, when it is determined that the size of the melt pool MP determined at the step S23 is not equal to the target value (the step S24: No), the control apparatus 8 changes a characteristic of the processing light EL so that the size of the melt pool MP is equal to the target value (a step S25). Namely, the control apparatus 8 changes a characteristic of the processing light EL so that the melt pool MP having the size that is equal to the target value is formed in order to form the structural layer SL#n+1 (the step S25). On the other hand, as result of the determination at the step S24, when it is determined that the size of the melt pool MP determined at the step S23 is equal to the target value (the step S24: Yes), the control apparatus 8 may not change the characteristic of the processing light EL

The characteristic of the processing light EL may include the intensity of the processing light EL. This is because an amount of an energy transmitted from the processing light EL to the build surface MS is larger as the intensity of the processing light EL is higher, and thus, the formed melt pool MP is larger. The characteristic of the processing light EL may include a distribution of the intensity of the processing light EL. This is because a distribution of the amount of the energy transmitted from the processing light EL to the build surface MS changes when the distribution of the intensity of the processing light EL changes, and thus, the formed melt pool MP is larger.

Then, the control apparatus 8 determines whether or not whole of the structural layer SL#n+1 is already formed (a step S26). As a result of the determination at the step S26, when it is determined that a part of the structural layer SL#n+1 is not yet formed (the step S26: No), the control apparatus 8 repeats the processes from the step S21 to the step S25.

On the other hand, as a result of the determination at the step S26, when it is determined that whole of the structural layer SL#n+1 is already formed (the step S26: Yes), the control apparatus 8 determines whether or not the processing control operation should be ended (a step S27). For example, when the structural layer SL#n+2 is formed following the structural layer SL#n+1, the control apparatus 8 may control the processing system SYS by using the melt pool image IMG_M to form the structural layer SL#n+2 by using the processing condition set by the condition set operation in a period when the structural layer SL#n+2 is formed. Therefore, when the structural layer SL#n+2 is formed following the structural layer SL#n+1, the control apparatus 8 may determine that the processing control operation should not be ended. On the other hand, when the structural layer SL#n+2 is not formed following the structural layer SL#n+1, the control apparatus 8 may determine that the processing control operation should be ended.

As a result of the determination at the step S27, when it is determined that the processing control operation should not be ended (the step S27: No), the control apparatus 8 increments the variable number n by one (a step S28), and then repeats the processes from the step S21 to the step S26. On the other hand, when it is determined that the processing control operation should be ended (the step S27: Yes), the control apparatus 8 ends the processing control operation illustrated in FIG. X16.

Note that FIG. 19 illustrates an example of the processing control operation when the target value of the size of the melt pool MP is set as the processing condition by the condition set operation. However, the control apparatus 8 may perform the processing control operation illustrated in FIG. 19, even when the target value of the size of the melt pool MP is not set as the processing condition by the condition set operation. In this case, the target value of the size of the melt pool MP used at the step S24 in FIG. 19 may be set in advance or may be properly set by an operation that is different from the condition set operation illustrated in FIG. 16.

Moreover, the control apparatus 8 may perform the processing control operation illustrated in FIG. 19, even when the processing condition that is different from the target value of the size of the melt pool MP is set by the condition set operation. Namely, the control apparatus 8 may control the processing system SYS based on the workpiece image IMG_W to process the workpiece W by using the set processing condition by performing an operation that is same as the processing control operation illustrated in FIG. 19, even when the processing condition that is different from the target value of the size of the melt pool MP is set by the condition set operation.

### (3) Technical Effect of Processing System SYS in Present Example Embodiment

As described above, the processing system SYS uses the observation system 7 to properly observe both of the workpiece W and the melt pool MP Namely, the processing system SYS uses the observation system 7 to generate the observation image IMG in which both of the workpiece W and the melt pool MP are properly included. Thus, the processing system SYS is capable of properly extracting each of the workpiece image IMG_W and the melt pool image IMG_M from the observation image IMG. As a result, the processing system SYS is capable of properly form the three-dimensional structural object ST by using the workpiece image IMG_W and the melt pool image IMG_M.

### (4) Modified Example

### (4-1) First Modified Example

In the above described description, the control apparatus 8 determines the shape of the workpiece W (especially, the shape of the structural layer SL#n currently formed by the processing apparatus 2) based on the workpiece image IMG_W in the condition set operation. On the other hand, in a first modified example, the control apparatus 8 extracts, from the workpiece image IMG_W, a workpiece image IMG W' that is suitable for determining the shape of the workpiece W (especially, the shape of the structural layer SL#n), and determines the shape of the workpiece W (especially, the shape of the structural layer SL#n) based on the workpiece image IMG W'.

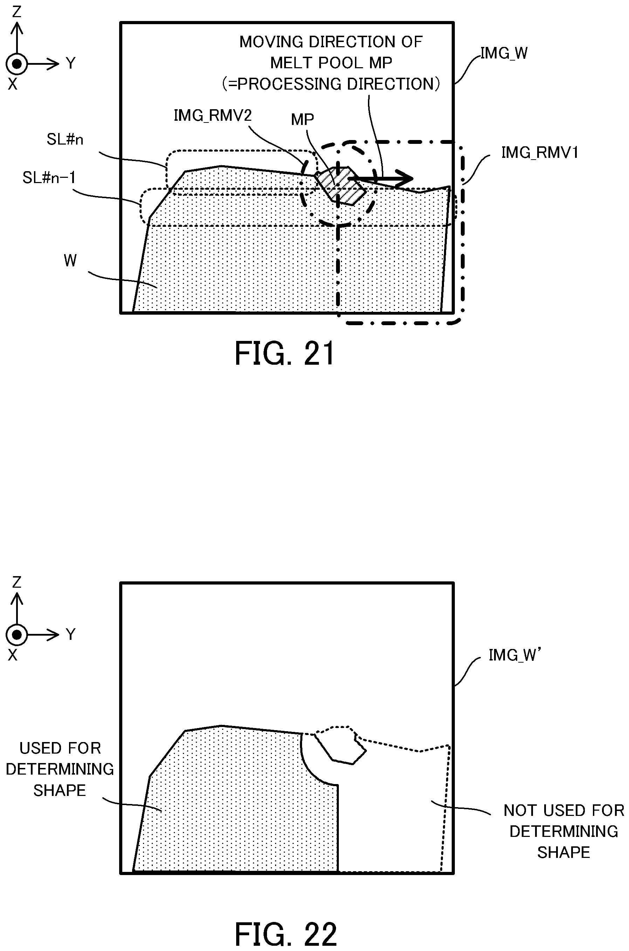

Specifically, as illustrated in FIG. 21 that is a planar view illustrating one example of the workpiece image IMG_W, the control apparatus 8 may remove at least one of removed images part IMG_RMV1 and IMG_RMV2 from the workpiece image IMG_W in order to generate the workpiece image IMG W'. Namely, as illustrated in FIG. 22 that is a planar view illustrating the workpiece image IMG W', the workpiece image IMG W' may be an image that is generated by removing at least one of the removed images part IMG_RMV1 and IMG_RMV2 from the workpiece image IMG_W. Note that FIG. 22 illustrates an example of the workpiece image IMG W' in which both of the removed images part IMG_RMV1 and IMG_RMV2 are removed.

The removed image part IMG_RMV1 includes an image part of the workpiece image IMG_W that is located at a frontward side viewed from the melt pool MP along a moving direction of the melt pool MP (namely, a moving direction of the irradiated part EA and the target irradiation area EA _tgt that are irradiated with the processing light EL) relative to the workpiece W. The removed image part IMG_RMV1 is an image part in which the build surface MS on which the melt pool MP will be formed from now is included. The removed image part IMG_RMV1 is an image part in which the build surface MS on which the structural layer SL will be formed from now is included. Thus, there is a high possibility that the structural layer SL#n is not included in the removed image part IMG_RMV1. Therefore, it can be said that the workpiece image IMG_W' in which the removed image part IMG_RMV1 is removed is more suitable for determining the shape of the workpiece W (especially, the shape of the structural layer SL#n) than the workpiece image IMG_W in which the removed image part IMG_RMV1 is not removed. This is because there is a lower possibility that the shape of the build surface MS (namely, the structural layer SL#n-1) included in the removed image part IMG_RMV1 is incorrectly recognized as a part of the shape of the structural layer SL#n.

The removed image part IMG_RMV2 include an image part that is located within a predetermined distance from the melt pool MP As described above, the melt pool light ML having the relatively high intensity is emitted from the melt pool MP Thus, there is a possibility that a part of the workpiece W that is located within the predetermined distance from the melt pool MP is not properly included in the observation image IMG (furthermore, workpiece image IMG W) due to the influence of the melt pool light ML having the relatively high intensity. Therefore, it can be said that the workpiece image IMG W' in which the removed image part IMG_RMV2 is removed is more suitable for determining the shape of the workpiece W (especially, the shape of the structural layer SL#n) than the workpiece image IMG_W in which the removed image part IMG_RMV2 is not removed.

Each of the removed image parts IMG_RMV1 and IMG_RMV2 depends on a position of the melt pool MP (namely, a position from which the melt pool light ML is emitted) in the observation image IMG. Thus, the control apparatus 8 may determine the position of the melt pool MP (namely, the position from which the melt pool light ML is emitted) in the observation image IMG, and may generate the workpiece image IMG_W' based on the determined position of the melt pool MP Specifically, the control apparatus 8 may determine the removed image part IMG_RMV1 in the workpiece image IMG_W based on the determined position of the melt pool MP and the moving direction of the melt pool MP Moreover, the control apparatus 8 may determine the removed image part IMG_RMV2 in the workpiece image IMG_W based on the determined position of the melt pool MP Then, the control apparatus 8 may generate the workpiece image IMG W' by removing the determined removed image parts IMG_RMV1 and IMG_RMV2 from the workpiece image IMG_W. In this case, it can be said that the control apparatus 8 substantially determines a range of the workpiece image IMG_W that should be used to determine the shape of the workpiece W (namely, a range of the workpiece light WL that should be used to determine the shape of the workpiece W).

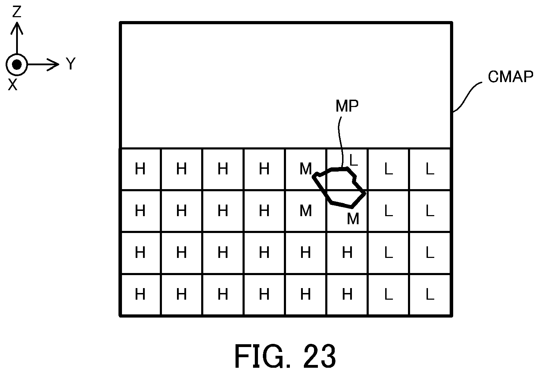

In order to remove at least one of the removed image parts IMG_RMV1 and IMG_RMV2, the control apparatus 8 may use a reliability map CMAP illustrated in FIG. 23. The reliability map CMAP is a map that indicates a reliability of each part of the workpiece image IMG_W. The reliability indicated by the reliability map CMAP is an index that quantitatively indicates whether or not each part of the workpiece image IMG_W is suitable for a use application to determine the shape of the workpiece W (especially, the shape of the structural layer SL#n). The reliability indicated by the reliability map CMAP is an index that quantitatively indicates whether or not each part of the workpiece image IMG_W should be used to determine the shape of the workpiece W (especially, the shape of the structural layer SL#n). The reliability map CMAP indicates the reliability of each part of the workpiece image IMG_W so that the reliability of the removed image parts IMG_RMV1 and IMG_RMV2 of the workpiece image IMG_W is relatively low. The reliability map CMAP indicates the reliability of each part of the workpiece image IMG_W so that the reliability of an image part of the workpiece image IMG_W other than the removed image parts IMG_RMV1 and IMG_RMV2 is relatively high. For example, the reliability map CMAP illustrated in FIG. 23 indicates that the reliability of the removed image part IMG_RMV1 is the lowest, the reliability of the removed image part IMG_RMV2 is the second lowest, and the reliability of the removed image parts IMG_RMV1 and IMG_RMV2 is high. Namely, the reliability map CMAP illustrated in FIG. 23 indicates that the reliability of an area located at the frontward side viewed from the melt pool MP along the moving direction of the melt pool MP (namely, a processing direction) is the lowest, the reliability of an area located within the predetermined distance from the melt pool MP is the second lowest, and the reliability of the other area is high.

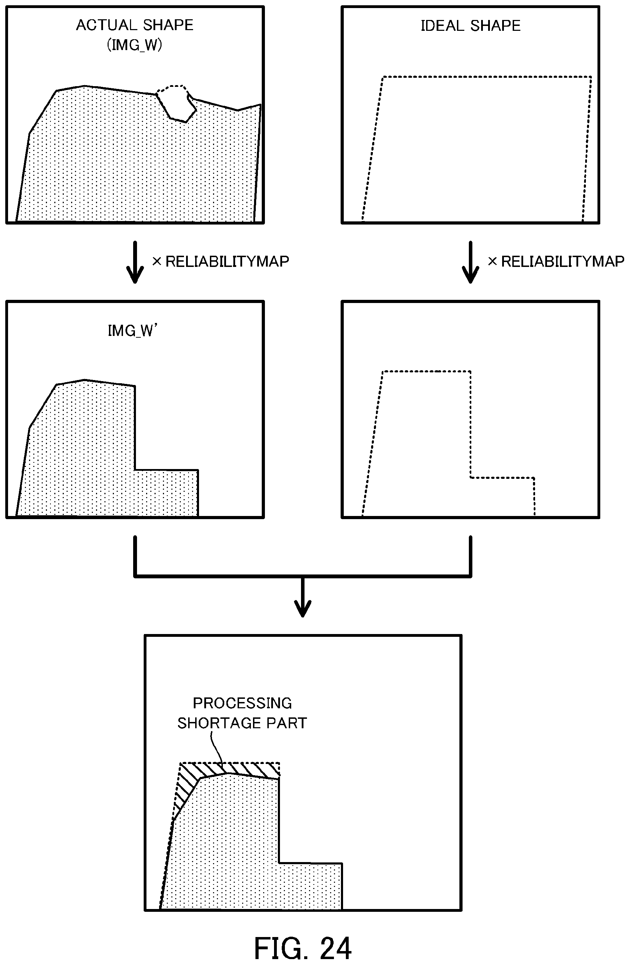

When the reliability map CMAP is used, the control apparatus 8 may generate the workpiece image IMG W' by removing an image part of the workpiece image IMG_W having the relatively low reliability indicated by the reliability map CMAP (for example, the image part corresponding to the reliability of "L (Low)" and "M (Middle)" illustrated in FIG. 23), as illustrated in a left drawing in FIG. 24. As a result, the control apparatus 8 is capable of generating the workpiece image IMG W' relatively easily. The, the control apparatus 8 determines determine the shape of the workpiece W (especially, the shape of the structural layer SL#n) based on the workpiece image IMG W'. Then, the control apparatus 8 sets the processing condition by calculating the difference between the determined actual shape of the workpiece W and the ideal shape of the workpiece W. However, when the reliability map CMAP is used, the control apparatus 8 may not use a shape corresponding to a part of the ideal shape of the workpiece W having the relatively low reliability indicated by the reliability map CMAP, as illustrated in a right drawing in FIG. 24. The control apparatus 8 may use a shape corresponding to a part of the ideal shape of the workpiece W having the relatively high reliability indicated by the reliability map CMAP. As a result, as illustrated in a lower drawing in FIG. 24, the control apparatus 8 is capable of calculating the difference between the determined actual shape of the workpiece W and the ideal shape of the workpiece W, even when the reliability map CMAP is used.

According to the above described first modified example, the processing system SYS is capable of determining the shape of the workpiece W (especially, the shape of the structural layer SL#n) more properly. As a result, the processing system SYS is capable of setting the processing condition more properly.

Note that the control apparatus 8 may change the processing condition for forming the structural layer SL#n, which has been already set, in the period when the structural layer SL#n is formed, in addition to or instead of setting the processing condition for forming the structural layer SL#n+1. For example, the control apparatus 8 may change the processing condition for forming the structural layer SL#n, which has been already set, based on the shape of the structural layer SL#n determined by the condition set operation. Specifically, when a first part of the structural layer SL#n the shape of which is different from the ideal shape is formed on a first area of the build surface MS, there is a possibility that the processing condition that has been already set is not actually proper. When the processing condition that has been already set is not changed in this situation, there is a possibility that a second part of the structural layer SL#n the shape of which is different from the ideal shape will be formed on a second area of the build surface MS on which the second part of the structural layer SL#n, which is not yet formed, will be formed from now. Thus, in the period when the structural layer SL#n is formed, the control apparatus 8 may determine the shape of the first part of the structural layer SL#n that has been already formed, and may change the processing condition for forming the second part of the structural layer SL#n, which is not yet formed (namely, which will be formed from now), based on the determined shape. In this case, the control apparatus 8 may change the processing condition for forming the second part of the structural layer SL#n so that a difference between an actual shape and an ideal shape of the second part of the structural layer SL#n decreases (typically, is zero). Moreover, the control apparatus 8 may change the processing condition for forming the structural layer SL#n, which has been already set, in the period when the structural layer SL#n is formed, not only in the first modified example in which the shape of the workpiece W (especially, the shape of the structural layer SL#n) is determined based on the workpiece image IMG_W' but also in a case where the shape of the workpiece W (especially, the shape of the structural layer SL#n) is determined based on the workpiece image IMG_W as described above.

Moreover, in the above described description, the control apparatus 8 sets the processing condition for forming the structural layer SL#n+1 in the period when the structural layer SL#n is formed. Namely, the control apparatus 8 sets the processing condition for forming the structural layer SL#n+1 before starting to form the structural layer SL#n+1. However, the control apparatus 8 may not set the processing condition for forming the structural layer SL#n+1 in the period when the structural layer SL#n is formed. Namely, the control apparatus 8 may not set the processing condition for forming the structural layer SL#n+1 before finishing forming the structural layer SL#n. In this case, the control apparatus 8 may set the processing condition for forming the structural layer SL#n+1 in the period when the structural layer SL#n+1 is formed. Namely, the control apparatus 8 may set the processing condition for forming the structural layer SL#n+1 after starting to form the structural layer SL#n+1 (namely, after finishing forming the structural layer SL#n). For example, after starting to form the structural layer SL#n+1, the control apparatus 8 may determine the shape of the structural layer SL#n on which the structural layer SL#n+1 is expected to be formed from now based on the workpiece image IMG_W. Furthermore, after starting to form the structural layer SL#n+1, the control apparatus 8 may set the processing condition for forming the structural layer SL#n+1 that is expected to be formed from now based on the determined shape of the structural layer SL#n. Incidentally, even when the processing condition for forming the structural layer SL#n+1 is set in advance before starting to form the structural layer SL#n+1, the control apparatus 8 may determine the shape of the structural layer SL#n on which the structural layer SL#n+1 is expected to be formed from now and may change the processing condition for forming the structural layer SL#n+1 that is expected to be formed from now based on the determined shape of the structural layer SL#n after starting to form the structural layer SL#n+1.

When the processing condition for forming the structural layer SL#n+1 is set in the period when the structural layer SL#n+1 is formed, the control apparatus 8 may determine the shape of the structural layer SL#n based on the workpiece image IMG W' that is generated by removing at least one of removed image parts IMG_RMV2 and IMG_RMV3 from the workpiece image IMG_W. The removed image part IMG_RMV3 includes an image part of the workpiece image IMG_W that is located at a backward side viewed from the melt pool MP along the moving direction of the melt pool MP relative to the workpiece W. The removed image part IMG_RMV3 is an image part in which the structural layer SL#n+1 that has been already formed is included. Therefore, it can be said that the workpiece image IMG_W' in which the removed image part IMG_RMV3 is removed is more suitable for determining the shape of the workpiece W (especially, the shape of the structural layer SL#n) for the purpose of setting the processing condition for the structural layer SL#n+1 than the workpiece image IMG_W in which the removed image part IMG_RMV13is not removed. In this case, the reliability map CMAP indicating the reliability of each part of the workpiece image IMG_W so that the reliability of an image part of the workpiece image IMG_W other than the removed image parts IMG_RMV2 and IMG_RMV3 is relatively high may be used.

### (4-2) Second Modified Example

In a second modified example, the control apparatus 8 may control the illumination apparatus 71 based on at least one of the observation image IMG, the workpiece image IMG_W and the melt pool image IMG_M.

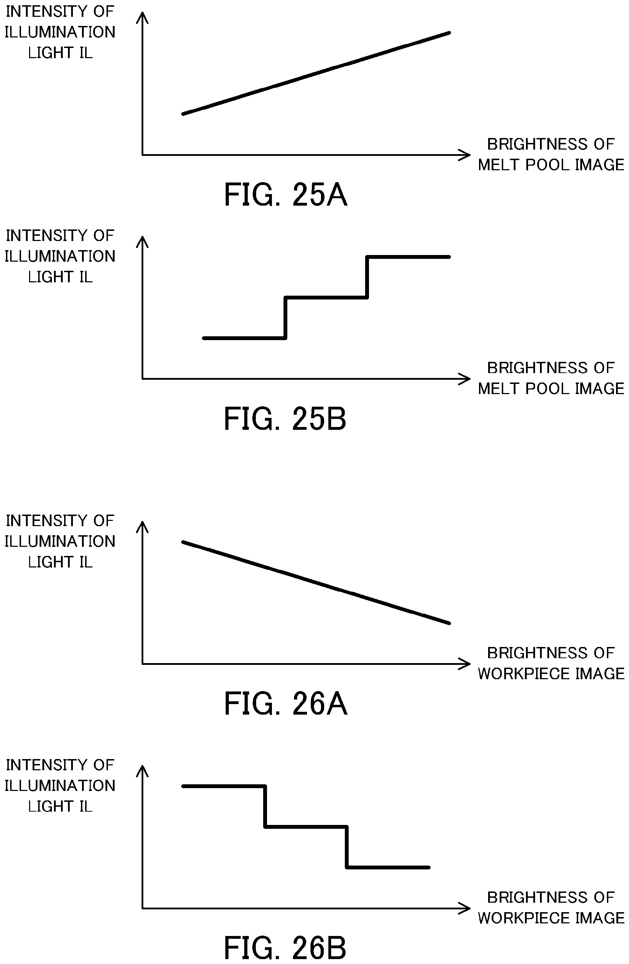

For example, the control apparatus 8 may control the illumination apparatus 71 based on a brightness of the melt pool image IMG_M (alternatively, a part in the observation image IMG corresponding to the melt pool MP, the same is applied to the second modified example). Specifically, as illustrated in FIG. 25A and FIG. 25B, the control apparatus 8 may control the illumination apparatus 71 so that the intensity of the illumination light IL is higher as the brightness of the melt pool image IMG_M is higher. Note that FIG. 25A illustrates an example in which the intensity of the illumination light IL is higher in a continuous manner as the brightness of the melt pool image IMG M is higher. FIG. 25B illustrates an example in which the intensity of the illumination light IL is higher in a stepwise manner as the brightness of the melt pool image IMG_M is higher.

For example, the control apparatus 8 may control the illumination apparatus 71 based on a brightness of the workpiece image IMG_W (alternatively, a part in the observation image IMG corresponding to the workpiece W the same is applied to the second modified example). Specifically, as illustrated in FIG. 26A and FIG. 26B, the control apparatus 8 may control the illumination apparatus 71 so that the intensity of the illumination light IL is lower as the brightness of the workpiece image IMG_W is higher. Note that FIG. 26A illustrates an example in which the intensity of the illumination light IL is lower in a continuous manner as the brightness of the workpiece image IMG_W is higher. FIG. 26B illustrates an example in which the intensity of the illumination light IL is lower in a stepwise manner as the brightness of the workpiece image IMG_W is higher.

For example, the control apparatus 8 may control the illumination apparatus 71 based on the brightness of the melt pool image IMG_M and the brightness of the workpiece image IMG_W. Specifically, the control apparatus 8 may control the illumination apparatus 71 so that the intensity of the illumination light IL increases when an average brightness of the melt pool image IMG_M is higher than an average brightness of the workpiece image IMG_W by a first predetermined value or more. In this case, the control apparatus 8 may control the illumination apparatus 71 so that the intensity of the illumination light IL is higher as a difference between the average brightness of the melt pool image IMG_M and the average brightness of the workpiece image IMG_W is larger. On the other hand, the control apparatus 8 may control the illumination apparatus 71 so that the intensity of the illumination light IL decreases when the average brightness of the melt pool image IMG_M is lower than the average brightness of the workpiece image IMG_W by a second predetermined value or more. In this case, the control apparatus 8 may control the illumination apparatus 71 so that the intensity of the illumination light IL is lower as the difference between the average brightness of the melt pool image IMG_M and the average brightness of the workpiece image IMG_W is larger.

Note that the average brightness of the melt pool image IMG_M may be a value that is obtained by dividing a total sum of the brightness of each part (typically, each pixel) of the melt pool image IMG_M by an area size of the melt pool image IMG_M (typically, the number of pixel). The average brightness of the workpiece image IMG_W may be a value that is obtained by dividing a total sum of the brightness of each part (typically, each pixel) of the workpiece image IMG_W by an area size of the workpiece image IMG_W (typically, the number of pixel). A reason why the average brightness is used is that the area size of the workpiece image IMG_W is possibly different from the area size of the melt pool image IMG_M.

As a result, the brightness of the workpiece image IMG_W is a certain brightness that is suitable for determining the shape of the workpiece W. Thus, according to the second modified example, the processing system SYS is capable of determining the shape of the workpiece W more properly. As a result, the processing system SYS is capable of setting the processing condition more properly.

Note that the control apparatus 8 may adjust a gain γ of the imaging apparatus 721 based on at least one of the observation image IMG, the workpiece image IMG_W and the melt pool image IMG_M, in addition to or instead of controlling the illumination apparatus 71 based on at least one of the observation image IMG, the workpiece image IMG_W and the melt pool image IMG_M. In this case, the control apparatus 8 may adjust a gain γ_ML related to the color corresponding to the wavelength range λrange_ML of the melt pool light ML and a gain γ_WL related to the color corresponding to the wavelength range λrange_WL of the workpiece light WL, independently. Specifically, the control apparatus 8 may adjust the gains γ_ML and γ_WL so that the gain γ_WL related to the color corresponding to the wavelength range λrange_WL of the workpiece light WL is larger than gain γ_ML related to the color corresponding to the wavelength range λrange_ML of the melt pool light ML Even in this case, the brightness of the workpiece image IMG_W is a certain brightness that is more suitable for determining the shape of the workpiece W, compared to a case where the gain γ is not adjusted. As a result, the processing system SYS is capable of setting the processing condition more properly.

### (4-3) Third Modified Example

In the third modified example, the illumination apparatus 71 may illuminate the build material M supplied from the material nozzle 212 with the illumination light IL, in addition to or instead of the workpiece W. For example, the illumination apparatus 71 may illuminate the build material M passing through a supply path between the material nozzle 212 and the workpiece W (especially, the target supply area MA_tgt) (in the below described description, it is referred to as "build material M1") with the illumination light IL. For example, the illumination apparatus 71 may illuminate the flying build material M bounced by at least one of the workpiece W and the stage 31 (in the below described description, it is referred to as "build material M2") with the illumination light IL. For example, the illumination apparatus 71 may illuminate the build material M remaining on at least one of the workpiece W and the stage 31 (in the below described description, it is referred to as "build material M3") with the illumination light IL. In the below described description, the build material M in the third modified example means at least one of the build materials M1 to M3, if there is no special notation. Furthermore, the observation apparatus 72 may observe the build material M supplied from the material nozzle 212, in addition to or instead of the workpiece W. Specifically, the observation apparatus 72 may detect a light from the build material M supplied from the material nozzle 212, in addition to or instead of the workpiece W. The observation apparatus 72 may capture an image of the build material M supplied from the material nozzle 212, in addition to or instead of the workpiece W. Namely, in the third modified example, the observation target object may include the build material M supplied from the material nozzle 212.

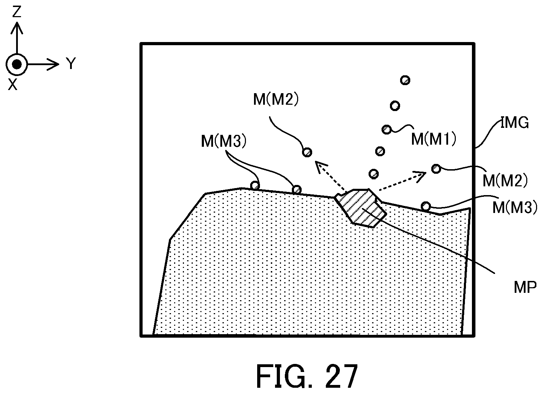

In this case, as illustrated in FIG. 27 that is a planar view illustrating the observation image IMG generated in the third modified example, the build material M (furthermore, the workpiece W in some cases) having the color based on the wavelength range λrange_lL of the illumination light IL is included in the observation image IMG. Thus, the control apparatus 8 is capable of extracting the workpiece image IMG_W in which the build material M is included from the observation image IMG. When the workpiece image IMG_W in which the build material M is included is extracted, the control apparatus 8 may control the supply aspect of the build materials M based on the workpiece image IMG W. For example, the control apparatus 8 may determine an actual supplied amount of the build materials M to the melt pool MP based on the workpiece image IMG_W, and may control the supplied amount of the build materials M to the melt pool MP so that the determined supplied amount is equal to a target value of the supplied amount of the build materials M.

Note that the control apparatus 8 may control the moving speed of the processing head 21 in order to control the supplied amount of the build materials M to the melt pool MP The supplied amount of the build materials M to each part of the build surface MS per unit time is larger as the moving speed of the processing head 21 is slower. Therefore, the supplied amount of the build materials M to the melt pool MP is larger as the moving speed of the processing head 21 is slower.

### (4-4) Fourth Modified Example

In a fourth modified example, the illumination apparatus 71 may illuminate the workpiece W with the illumination light IL from each of a plurality of different directions. Namely, the illumination apparatus 71 may irradiates the workpiece W with the illumination light IL from each of the plurality of different directions.

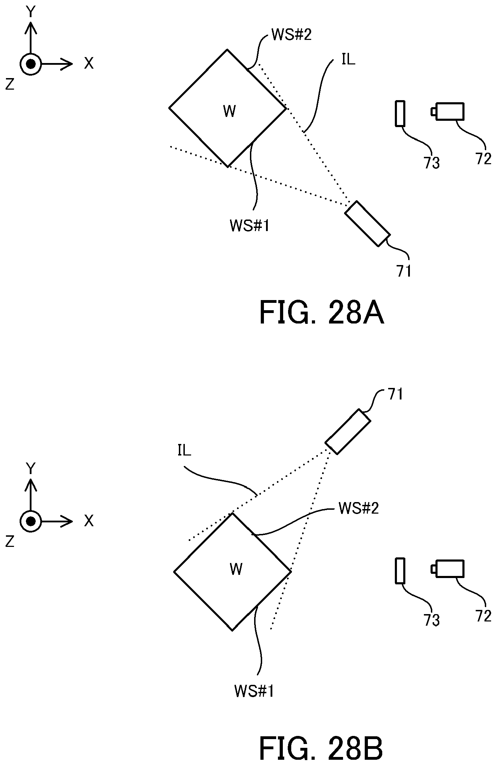

For example, as illustrated in FIG. 28A, the illumination apparatus 71 may illuminate a first surface WS#1 of the workpiece W with the illumination light IL from a first direction. FIG. 28A illustrates an example in which the illumination apparatus 71 illuminates the first surface WS#1 of the workpiece W with the illumination light IL from a diagonal right direction view from the workpiece W. Furthermore, as illustrated in FIG. 28B, the illumination apparatus 71 may illuminate a second surface WS#2, which is different from the first surface WS#1, of the workpiece W with the illumination light IL from a second direction that is different from the first direction. FIG. 28B illustrates an example in which the illumination apparatus 71 illuminates the second surface WS#2 of the workpiece W with the illumination light IL from a diagonal left direction view from the workpiece W. In this case, the illumination apparatus 71 may move between a position from which it is capable of illuminating the first surface WS#1 of the workpiece W with the illumination light IL and a position from which it is capable of illuminating the second surface WS#2 of the workpiece W with the illumination light IL. Thus, the observation system 7 may include an illumination driving system that is configured to move the illumination apparatus 71.

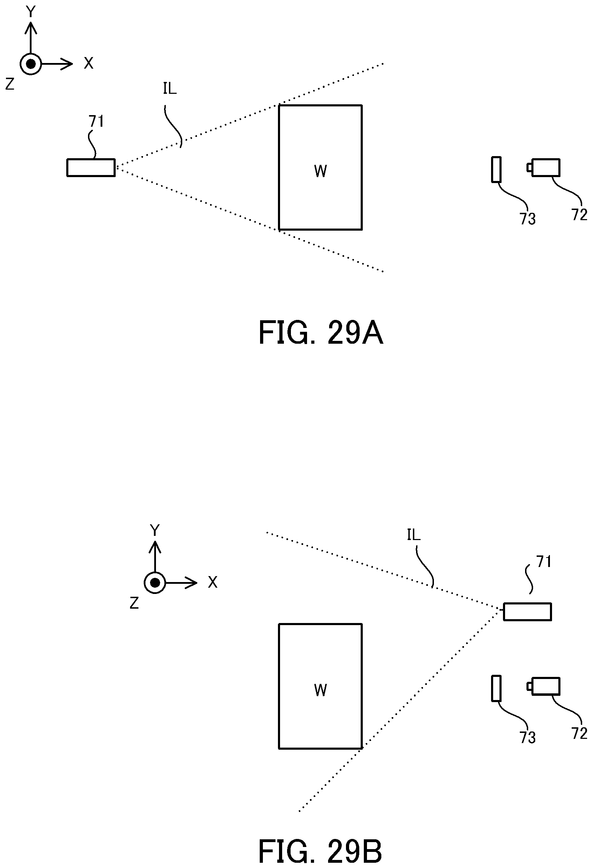

For example, as illustrated in FIG. 29A, the illumination apparatus 71 may emit the illumination light IL toward the observation apparatus 72 from a first direction to illuminate the workpiece W with the illumination light IL. Namely, the illumination apparatus 71 may emit the illumination light IL toward a direction in which the observation apparatus 72 exists to illuminate the workpiece W with the illumination light IL. In this case, the workpiece W is typically located between the illumination apparatus 71 and the observation apparatus 72. FIG. 29A illustrates an example in which the illumination apparatus 71 is located at the -X side than the workpiece W and the observation apparatus 72 is located at the +X side than the workpiece W. As a result, the observation apparatus 72 (the imaging apparatus 721) generates, as the observation image IMG, a negative image of the workpiece W. Furthermore, as illustrated in FIG. 29B, the illumination apparatus 71 may emit the illumination light IL toward a direction different from the observation apparatus 72 from a second direction different from the first direction to illuminate the workpiece W with the illumination light IL. Namely, the illumination apparatus 71 may emit the illumination light IL toward a direction different from the direction in which the observation apparatus 72 exists to illuminate the workpiece W with the illumination light IL. FIG. 29B illustrates an example in which both of the illumination apparatus 71 and the observation apparatus 72 are located at the +X side than the workpiece W. As a result, the observation apparatus 72 (the imaging apparatus 721) generates, as the observation image IMG, a positive image of the workpiece W. In this case, the illumination apparatus 71 move between a position from which it is capable of emitting the illumination light IL toward the direction in which the observation apparatus 72 exists and a position from which it is capable of emitting the illumination light IL toward the direction different from the direction in which the observation apparatus 72 exists.

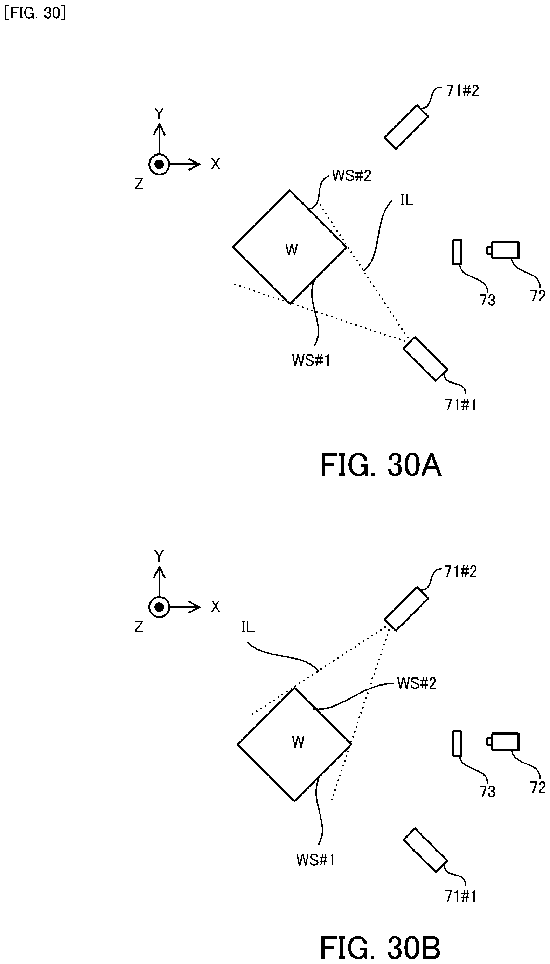

Alternatively, as illustrated in FIG. 30A and FIG. 30B, the processing system SYS may include a plurality of illumination apparatuses 71, in addition to moving the illumination apparatus 71. The plurality of illumination apparatuses 71 may illuminate the workpiece W with the illumination lights IL from a plurality of different directions, respectively. Namely, the plurality of illumination apparatuses 71 may irradiate the workpiece W with the illumination lights IL from the plurality of different directions, respectively. In an example illustrated in FIG. 30A and FIG. 30B, the processing system SYS includes an illumination apparatus 71#1 and an illumination apparatus 71#2. The illumination apparatus 71#1 may illuminate a first surface WS#1 of the workpiece W with the illumination light IL from a first direction. FIG. 30A illustrates an example in which the illumination apparatus 71#1 is located in a diagonal right direction view from the workpiece W. The illumination apparatus 71#2 may illuminate a second surface WS#2 of the workpiece W with the illumination light IL from a second direction. FIG. 30B illustrates an example in which the illumination apparatus 71#2 is located in a diagonal left direction view from the workpiece W. Alternatively, the illumination apparatus 71#1 may emit the illumination light IL toward the observation apparatus 72 from a first direction to illuminate the workpiece W with the illumination light IL. The illumination apparatus 71#2 may emit the illumination light IL toward a direction different from the observation apparatus 72 from a second direction to illuminate the workpiece W with the illumination light IL.

Note that the plurality of illumination apparatuses 71 may irradiate the workpiece W with the illumination lights IL in different wavelength ranges, respectively. In this case, each of the plurality of illumination apparatuses 71 may irradiate the workpiece W with the illumination lights IL from the same direction.

### (4-5) Fifth Modified Example

In the fifth modified example, the processing system SYS may include a plurality of imaging apparatuses 721 that are configured to generate images by detecting lights in different wavelength ranges, respectively. For example, the processing system SYS may include an imaging apparatus 721#1 that is configured to generate the workpiece image IMG_W by detecting the workpiece light WL and an imaging apparatus 721#2 that is configured to generate the melt pool image IMG_M by detecting the melt pool light ML

The imaging apparatus 721#1 may detect the workpiece light WL through a filter member 73#1. The filter member 73#1 is a member that allows a light in at least a part of the wavelength range λrangeWL of the workpiece light WL to pass therethrough and that reduces an intensity of or shields a light in the other wavelength range. The filter member 73#1 is different from the above described filter member 73 in that it shields even a light in the wavelength range λrange_ML of the melt pool light ML Another feature of the filter member 73#1 may be same as that of the above described filter member 73.

The imaging apparatus 721#2 may detect the melt pool light ML through a filter member 73#2. The filter member 73#2 is a member that allows a light in at least a part of the wavelength range λrange_ML of the melt pool light ML to pass therethrough and that reduces an intensity of or shields a light in the other wavelength range. The filter member 73#2 is different from the above described filter member 73 in that it shields even a light in the wavelength range λrange_WL of the workpiece light WL. Another feature of the filter member 73#2 may be same as that of the above described filter member 73.

Here, a wavelength characteristic of the transmittance (as one example, the transmittance for each wavelength) of the filter member 73#1mayu be different from a wavelength characteristic of the transmittance of the filter member 73#2. As one example, the filter member 73#1 may allow the light in a part of the wavelength range λrange_ML of the melt pool light ML to pass therethrough and the filter member 73#2 may allow the light in another part of the wavelength range λrange_ML, which is different from the above described part, of the melt pool light ML to pass therethrough

Note that an optical axis of an optical system of the imaging apparatus 721#1 may not be parallel to an optical axis of an optical system of the imaging apparatus 721#2. In other words, the imaging apparatus 721#1 and the imaging apparatus 721#2 may detect the workpiece light WL and the melt pool light ML from different directions, respectively.

### (4-6) Sixth Modified Example

In the above described description, the observation apparatus 72 (the imaging apparatus 721) is located on the side of the workpiece W (especially, in a space adjacent to the workpiece W along the X axis direction that is the short direction of the workpiece W). The reason why the observation apparatus 72 (the imaging apparatus 721) is located at this position is that the workpiece W that is the observation target object has a shape in which the thickness along the X axis direction is relatively thin.

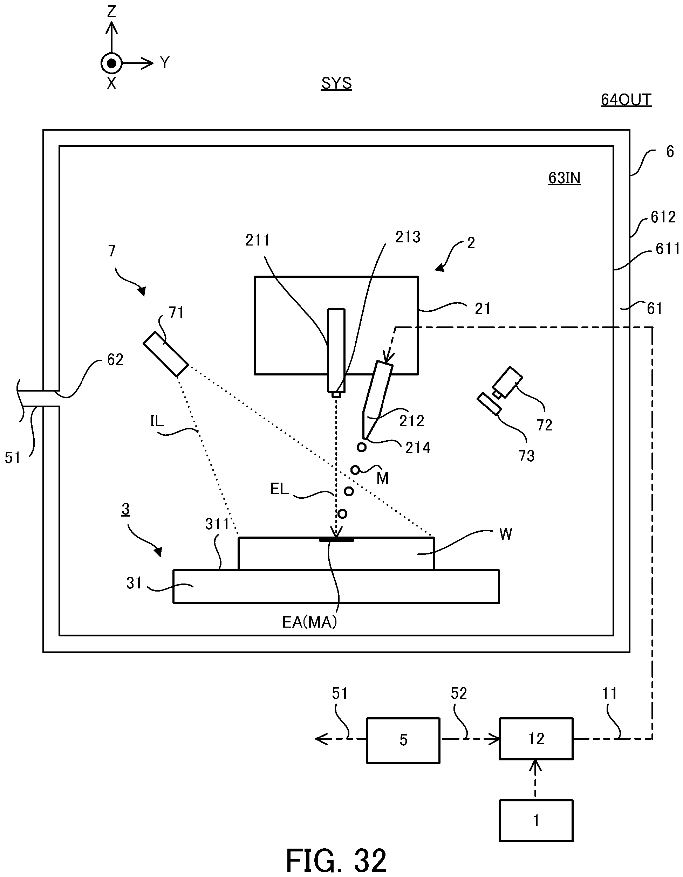

On the other hand, as illustrated in FIG. 32, the workpiece W may have a shape in which the thickness along the X axis direction is relatively thick. However, in this case, when the observation apparatus 72 (the imaging apparatus 721) is located on the side of the workpiece W (especially, in the space adjacent to the workpiece W along the X axis direction), there is a possibility that the melt pool MP does not exist in a range of an angle of view of the imaging apparatus 721. Thus, as illustrated in FIG. 32, the observation apparatus 72 (the imaging apparatus 721) may be located at a position that is different from a position on the side of the workpiece W. The observation apparatus 72 (the imaging apparatus 721) may be located at any position from which it is capable of capturing the image of the workpiece W (especially, the melt pool MP). In an example illustrated in FIG. 32, the observation apparatus 72 (the imaging apparatus 721) is located diagonally above the workpiece W.

### (4-7) Other Modified Example

The illumination apparatus 71 may illuminate whole of the workpiece W with the radiated illumination light IL. For example, FIG. 1 illustrates an example in which the illumination apparatus 71 illuminates whole of the workpiece W with the radiated illumination light IL. Alternatively, the illumination apparatus 71 may illuminate a part of the workpiece W selectively (limitedly) with the radiated illumination light IL. For example, the illumination apparatus 71 may illuminate a part of the workpiece W selectively with the spot-shaped illumination light IL having a relatively high brightness. For example, the illumination apparatus 71 may illuminate a part of the workpiece W selectively with the directional illumination light IL. When a part of the workpiece W is illuminated, the illumination apparatus 71 may illuminate the melt pool MP formed on the workpiece W selectively. The illumination apparatus 71 may illuminate the melt pool MP and a part of the workpiece W located near the melt pool MP selectively. When the melt pool MP is illuminated selectively, the control apparatus 8 may determine the position of the melt pool MP based on the observation image IMG (alternatively, the workpiece image IMG_W or the melt pool image IMG M), and may control the illumination apparatus 71 to irradiate the determined position of the melt pool MP with the illumination light IL. Alternatively, the control apparatus 8 may predict a position at which the melt pool MP is formed based on an information related to the processing condition for forming the three-dimensional structural object ST, and may control the illumination apparatus 71 to irradiate the predicted position of the melt pool MP with the illumination light IL.

In the above described description, the imaging apparatus 721 is an apparatus that is independent from the irradiation optical system 211 configured to emit the processing light EL. However, the imaging apparatus 721 may detect the light from the workpiece W through at least a partial optical member of the irradiation optical system 211. Namely, at least a part of the irradiation optical system 211 may be used as at least a part of an optical system of the imaging apparatus 721.

In the above described description, the observation system 7 observes the workpiece W by using the imaging apparatus 721. However, the observation system 7 may observe the workpiece W without using the imaging apparatus 721. For example, the observation system may observe the workpiece W by using the observation apparatus 72 including a light reception element that is configured to optically receive a light from the workpiece W. In this case, the control apparatus 8 may control the processing system SYS based on the optical received result of the light from the workpiece W by the light reception element.

In the above described description, the control apparatus 8 sets the processing conditions (for example, the target value of the size of the melt pool MP) based on the workpiece image IMG_W (the step S14 in FIG. 16), and changes the characteristic of the processing light EL so that the size of melt pool MP is equal to the target value (the step S25 in FIG. 19). However, the control apparatus 8 may control the processing apparatus 2 (for example, control the characteristic of the processing light EL) to keep the size of the melt pool MP constant.

In the above description, both of the observation operation and the control operation are performed under the control of the control apparatus 8. However, the observation operation may be performed under the control of a first control apparatus 8 and the control operation may be performed under the control of a second control apparatus 8. For example, the first control apparatus 8 may perform the operation for "controlling the illumination apparatus 71 so that the intensity of the illumination light IL is higher as the brightness of the melt pool image IMG_M is higher" (see the second modified example) in the observation operation, and the second control apparatus 8 may perform the operation for "controlling the processing apparatus 2 so that the size of the melt pool MP is equal to the target value" in the control operation. The first control apparatus 8 that mainly controls the illumination apparatus 71 and the second control apparatus 8 that mainly controls the processing apparatus 2 may be provided separately. In this case, the processing system SYS may include both of the first and second control apparatuses, or may include either one of the first and second control apparatuses.

In the above described description, the processing apparatus 2 melts the build materials M by irradiating the build materials M with the processing light EL. However, the processing apparatus 2 may melt the build materials M by irradiating the build materials M with any energy beam. In this case, the processing apparatus 2 may include a beam irradiation apparatus that is configured to emit any energy beam in addition to or instead of the irradiation optical system 211. At least one of a charged particle beam (for example, at least one of an electron beam and an ion beam), an electromagnetic wave and the like is one example of any energy beam.

In the above described description, the processing system SYS is configured to perform the additive processing by the Laser Metal Deposition. However, the processing system SYS may be configured to form the three-dimensional structural object ST from the build materials M by another method for forming the three-dimensional structural object ST by irradiating the build materials M with the processing light EL (alternatively, any energy beam). Alternatively, the processing system SYS may be configured to form the three-dimensional structural object ST by any method for the additive processing that is different from the method for forming the three-dimensional structural object ST by irradiating the build materials M with the processing light EL (alternatively, any energy beam).

Alternatively, the processing system SYS may perform a removal processing that removes at least a part of an object by irradiating the object such as the workpiece W with the processing light EL (alternatively, any energy beam), in addition to or instead of the additive processing. When the processing system SYS performs the removal processing, the observation apparatus 72 may be configured to detect a light from a fist part of the workpiece W that is irradiated with the processing light EL (namely, on which the removal processing is performed). The observation apparatus 72 may be configured to detect a light from a fist part of the workpiece W that has been hidden by a second part that is removed by the removal processing (namely, a first part of the workpiece W that is exposed by removing the second part). Moreover, the observation apparatus 72 may be configured to detect a light from a third part of the workpiece W that is not irradiated with the processing light EL (namely, on which the removal processing is not performed). The third part may include a part that is not expected to be irradiated with the processing light EL (namely, a part that is not expected to be removed), and may include a part that will be irradiated with the processing light EL (namely, a part that will be removed). As a result, the observation apparatus 72 is capable of properly observing the workpiece W on which the removal processing will be performed or has been performed. Alternatively, the processing system SYS may perform a marking processing that forms a mark (for example, a character, a number or a graphic) on at least a part of an object by irradiating the object such as the workpiece W with the processing light EL (alternatively, any energy beam), in addition to or instead of at least one of the additive processing and the removal processing. Even in these cases, the above described effect is achievable.

At least a part of the features of each embodiment described above may be properly combined with at least another a part of the features of each embodiment described above. A part of the features of each embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification. A processing system, which involves such changes, is also intended to be within the technical scope of the present invention.

### Description of Reference Codes

- SYS: processing system
- 1: material supply apparatus
- 2: processing apparatus
- 21: processing head
- 22: head driving system
- 3: stage apparatus
- 31: stage
- 7: observation system
- 71: illumination apparatus
- 72: observation apparatus
- 721: imaging apparatus
- 73: filter member
- 8: control apparatus
- W: workpiece
- M: build material
- SL: structural layer
- MS: build surface
- EA: irradiated part
- EA tgt: target irradiation area
- MA_tgt: target supply area
- MP: melt pool
- EL: processing light
- IL: illumination light
- WL: workpiece light
- ML: melt pool light
- IMG: observation image
- IMG_W: workpiece image
- IMG_M: melt pool image

## Claims

1. A processing system comprising:
an irradiation part that is configured to irradiate an object with an energy beam;
a powder supply part that is configured to supply powder to a melt pool formed by an irradiation of the energy beam;
an illumination apparatus that is configured to illuminate a part of a solidified part where the melt pool is solidified at least with a second light having a wavelength range that is different from a wavelength range of a first light emitted from the melt pool;
an imaging apparatus that is configured to optically receive at least a part of the first light and at least a part of a third light from a part of the solidified part that is illuminated with the second light; and
a display apparatus that is configured to display, based on an output of the imaging apparatus, an image related to the melt pool and the solidified part.

2. The processing system according to claim 1, wherein
an image obtained from the output of the imaging apparatus includes an image in which a difference between an intensity of the first light and an intensity of the third light is equal to or smaller than an allowable value.

3. The processing system according to claim 1 or 2 further comprising a filter member that allows at least a part of the first light and at least a part of the third light from a part of the solidified part to pass therethrough,
a transmittance of the filter member with respect to the first and third lights being set so that a difference between an intensity of the first light optically received by the imaging apparatus and an intensity of the third light detected by the detection apparatus is equal to or smaller than an allowable value.

4. The processing system according to any one of claims 1 to 3 further comprising an illumination control apparatus that is configured to control the illumination apparatus,
the illumination control apparatus being configured to control the illumination apparatus so that an intensity of the second light is higher as a brightness of an image part, which corresponds to the first light, of an image obtained from the output of the imaging apparatus is higher.

5. The processing system according to any one of claims 1 to 4 further comprising a processing control apparatus that is configured to control the processing apparatus based on the output of the imaging apparatus.

6. The processing system according to claim 5, wherein
the processing control apparatus is configured to determine a shape of the object based on an optical received result of the third light, and control the processing apparatus so that a difference between the shape of the object and a target shape of the object decreases.

7. The processing system according to claim 5 or 6, wherein
the processing control apparatus is configured to control the processing apparatus to keep a size of the melt pool constant based on an optical received result of the first light.

8. The processing system according to any one of claims 5 to 7, wherein
the processing control apparatus is configured to set a target value of a size of the melt pool based on an optical received result of the third light,
the processing control apparatus is configured to control the processing apparatus to process the object by forming the melt pool having a size that is equal to the set target value based on an optical received result of the first light.

9. A processing system comprising:
an irradiation part that is configured to irradiate an object with an energy beam;
a powder supply part that is configured to supply powder to a melt pool formed by an irradiation of the energy beam;
a filter member that allows at least a part of a first light emitted from the melt pool and at least a part of a third light from a part of a solidified part where the melt pool is solidified to pass therethrough;
an imaging apparatus that is configured to optically receive at least a part of the first light and at least a part of the third light that have passed through the filter member; and
a display apparatus that is configured to display, based on an output from the imaging apparatus, an image related to the melt pool and a part where the melt pool is solidified.

10. A processing system comprising:
a processing apparatus that is configured to process an object by irradiating the object with an energy beam;
an illumination apparatus that is configured to illuminate a part of the object at least with a second light in a wavelength range that is different from a wavelength range of a first light emitted from an irradiated part of the object that is irradiated with the energy beam;
a detection apparatus that is configured to detect a light from a part of the object; and
a display apparatus that is configured to display, based on an output from the detection apparatus, an image related to the object illuminated with the second light.

11. The processing system according to claim 10, wherein
the display apparatus is configured to display, based on the output from the detection apparatus, an image based on the first light from the irradiated part.

12. A processing system comprising:
a processing apparatus that is configured to process an object by irradiating the object with an energy beam;
an illumination apparatus that is configured to illuminate a part of the object at least with a second light in a wavelength range that is different from a wavelength range of a first light emitted from an irradiated part of the object that is irradiated with the energy beam;
a detection apparatus that is configured to detect a light from a part of the object; and
a display apparatus that is configured to display, based on an output from the detection apparatus, an image based on the first light from the irradiated part and an image related to the object illuminated with the second light.

13. The processing system according to claim 11 or 12, wherein
the detection apparatus is configured to detect the first light from the irradiated part and detect a third light from the object that is illuminated with the second light.

14. The processing system according to claim 13 further comprising a filter member that allows the first light and the third light to pass therethrough,
the detection apparatus being configured to detect the first light from the irradiated part and the third light from the object through the filter member.

15. The processing system according to claim 14, wherein
a transmittance of the filter member with respect to the first light is lower than a transmittance of the filter member with respect to the third light.

16. The processing system according to claim 14 or 15, wherein
a transmittance of the filter member with respect to the first and third lights is set so that a difference between an intensity of the first light detected by the detection apparatus and an intensity of the third light detected by the detection apparatus is equal to or smaller than an allowable value.

17. The processing system according to any one of claims 10 to 16 further comprising an illumination control apparatus that is configured to control the illumination apparatus based on a detected result of the first light.

18. The processing system according to any one of claims 13 to 16 further comprising an illumination control apparatus that is configured to control the illumination apparatus based on a detected result of the first light and a detected result of the third light.

19. The processing system according to claim 18, wherein
the illumination control apparatus is configured to control the illumination apparatus to increase an intensity of the second light when an average brightness of an image part corresponding to the first light is higher than an average brightness of an image part corresponding to the third light by a first predetermined value or more.

20. The processing system according to claim 18 or 19, wherein
the illumination control apparatus is configured to control the illumination apparatus to decrease an intensity of the second light when an average brightness of an image part corresponding to the first light is lower than an average brightness of an image part corresponding to the third light by a second predetermined value or more.

21. The processing system according to any one of claims 17 to 20, wherein
the illumination control apparatus is configured to control the illumination apparatus so that an intensity of the second light is higher as a brightness of an image part corresponding to the first light is higher.

22. The processing system according to any one of claims 13 to 16 further comprising an illumination control apparatus that is configured to control the illumination apparatus based on a detected result of the third light.

23. A processing system comprising:
an irradiation apparatus that is configured to emit an energy beam;
an illumination apparatus that is configured to perform an illumination with a second light in a wavelength range that is different from a wavelength range of a first light emitted from an irradiated part of the object that is irradiated with the energy beam; and
an light reception part that is configured to optically receive a light from a part of an area that is illuminated by the illumination apparatus at least.

24. The processing system according to claim 23, wherein
the area that is illuminated by the illumination apparatus includes at least one of the irradiated part of the object that is irradiated with the energy beam and an area that is not irradiated with the energy beam,
the light reception part is configured to optically receive a light from at least one of the irradiated part of the object that is irradiated with the energy beam and the area that is not irradiated with the energy beam.

25. The processing system according to claim 23 or 24 further comprising a powder supply member that is configured to supply powder to a vicinity of an irradiation position of the energy beam,
the area that is illuminated by the illumination apparatus including the powder,
the light reception part being configured to optically receive a light from the powder.

26. The processing system according to any one of claim 23 or 24 further comprising a powder supply member that is configured to supply powder to a vicinity of an irradiation position of the energy beam,
the processing system performing an additive processing by using the energy beam and the powder.

27. A processing system comprising:
a processing apparatus that is configured to process an object by irradiating the object with an energy beam;
an illumination apparatus that is configured to illuminate a part of the object at least with a second light in a wavelength range that is different from a wavelength range of a first light emitted from an irradiated part of the object that is irradiated with the energy beam; and
a detection apparatus that is configured to detect a light from a part of the object,
the processing apparatus being configured to process the object based on an information that is related to the object illuminated with the second light and that is detected by the detection apparatus.

28. The processing system according to claim 27, wherein
the processing apparatus is configured to process the object based on an information that is based on the first light from the irradiated part detected by the detection apparatus.

29. A processing system comprising:
a processing apparatus that is configured to process an object by irradiating the object with an energy beam;
an illumination apparatus that is configured to illuminate a part of the object at least with a second light in a wavelength range that is different from a wavelength range of a first light emitted from an irradiated part of the object that is irradiated with the energy beam; and
a detection apparatus that is configured to detect a light from a part of the object,
the processing apparatus being configured to process the object based on an information that is based on the first light from the irradiated part detected by the detection apparatus and an information related to the object that is illuminated with the second light.

30. The processing system according to claim 28 or 29, wherein
the detection apparatus is configured to detect the first light from the irradiated part and detect a third light from the object that is illuminated with the second light.

31. The processing system according to claim 30 further comprising a processing control apparatus that is configured to control the processing apparatus based on a detected result by the detection apparatus.

32. The processing system according to claim 31, wherein
the processing control apparatus is configured to use a detected result of the first light for a first use application and use a detected result of the third light for a second use application that is different from the first use application.

33. The processing system according to claim 31 or 32, wherein
the processing control apparatus is configured to set a processing condition of the processing apparatus based on a detected result of the third light,
the processing control apparatus is configured to control the processing apparatus based on a detected result of the first light so that the processing apparatus processes the object by using the set processing condition.

34. The processing system according to any one of claims 31 to 33, wherein
the processing control apparatus is configured to determine a shape of the object based on a detected result of the third light, and set a processing condition of the processing apparatus so that a difference between the shape of the object and a target shape of the object decreases.

35. The processing system according to claim 33 or 34, wherein
the processing control apparatus is configured to form a melt pool at the irradiated part by irradiating the object with the energy beam,
the processing control apparatus is configured to set, as the processing condition, a target value of a size of the melt pool based on the detected result of the third light,
the processing control apparatus is configured to control the processing apparatus to process the object by forming the melt pool having a size that is equal to the set target value based on a detected result of the first light.

36. The processing system according to any one of claims 31 to 35, wherein
the processing control apparatus includes:
a position determination apparatus that is configured to determine a position from which the first light is emitted; and
a use-range determination apparatus that is configured to determine a range of use of the third light based on the position determined by the position determination apparatus,
the processing control apparatus is configured to set a processing condition of the processing apparatus based on the third light used by the used range determination apparatus.

37. The processing system according to claim 36 further comprising a movement apparatus that is configured to move a position of the irradiated part,
the use-range determination apparatus being configured to determine the range of use of the third light based on a moving direction of the position of the irradiated part by the movement apparatus and the position determined by the position determination apparatus.

38. A processing system comprising:
a processing apparatus including an irradiation part that is configured to irradiate an object with an energy beam and a powder supply part that is configured to supply powder to a melt pool formed by an irradiation of the energy beam;
an illumination apparatus that is configured to illuminate a part of a solidified part where the melt pool is solidified at least with a second light in a wavelength range that is different from a wavelength range of a first light emitted from the melt pool;
a filter member that allows at least a part of the first light and at least a part of a third light from a part of the solidified part that is illuminated with the second light to pass therethrough;
an imaging apparatus that is configured to optically receive at least a part of the first light and at least a part of the third light that have passed through the filter member; and
a display apparatus that is configured to display, based on an output of the imaging apparatus, an image related to the melt pool and the solidified part,
a transmittance of the filter member with respect to the first light being lower than a transmittance of the filter member with respect to the third light.

39. The processing system according to claim 38, wherein
a transmittance of the filter member with respect to the first and third lights is set so that a difference between an intensity of the first light optically received by the imaging apparatus and an intensity of the third light detected by the detection apparatus is equal to or smaller than an allowable value.

40. The processing system according to claim 38 or 39 further comprising a processing control apparatus that is configured to control the processing apparatus based on the output of the imaging apparatus.

41. The processing system according to claim 40, wherein
the processing control apparatus is configured to determine a shape of the object based on an optical received result of the third light, and control the processing apparatus so that a difference between the shape of the object and a target shape of the object decreases.

42. The processing system according to claim 40 or 41, wherein
the processing control apparatus is configured to control the processing apparatus to keep a size of the melt pool constant based on an optical received result of the first light.

43. The processing system according to any one of claims 40 to 425, wherein
the processing control apparatus is configured to set a target value of a size of the melt pool based on an optical received result of the third light,
the processing control apparatus is configured to control the processing apparatus to process the object by forming the melt pool having a size that is equal to the set target value based on an optical received result of the first light.

44. The processing system according to any one of claims 47 to 43 further comprising an illumination control apparatus that is configured to control the illumination apparatus based on an optical received result of the first light,
the illumination control apparatus being configured to control the illumination apparatus so that an intensity of the second light is higher as a brightness of an image part, which corresponds to the first light, of an image obtained from the output of the imaging apparatus is higher.

45. The processing system according to any one of claims 38 to 44 further comprising a movement apparatus that is configured to move a position of an irradiated part that is irradiated with the energy beam,
a range of the third light that is used to set a processing condition of the processing apparatus is determined based on a moving direction of the position of the irradiated part by the movement apparatus and a position from which the first light is emitted.

46. A processing system comprising:
a processing apparatus including an irradiation part that is configured to irradiate an object with an energy beam and a powder supply part that is configured to supply powder to a melt pool formed by an irradiation of the energy beam;
an illumination apparatus that is configured to illuminate a part of a solidified part where the melt pool is solidified at least with a second light in a wavelength range that is different from a wavelength range of a first light emitted from the melt pool;
an imaging apparatus that is configured to optically receive at least a part of the first light and at least a part of a third light from a part of the solidified part that is illuminated with the second light; and
a processing control apparatus that is configured to control the processing apparatus based on an output of the imaging apparatus,
the processing control apparatus being configured to set a target value of a size of the melt pool based on an optical received result of the third light,
the processing control apparatus being configured to control the processing apparatus to process the object by forming the melt pool having a size that is equal to the set target value based on an optical received result of the first light.

47. A processing system comprising:
a processing apparatus including an irradiation part that is configured to irradiate an object with an energy beam and a powder supply part that is configured to supply powder to a melt pool formed by an irradiation of the energy beam;
an illumination apparatus that is configured to illuminate a part of a solidified part where the melt pool is solidified at least with a second light in a wavelength range that is different from a wavelength range of a first light emitted from the melt pool;
an imaging apparatus that is configured to optically receive at least a part of the first light and at least a part of a third light from a part of the solidified part that is illuminated with the second light; and
an illumination control apparatus that is configured to control the illumination apparatus based on an optical received result of the first light by the imaging apparatus,
the illumination control apparatus being configured to control the illumination apparatus so that an intensity of the second light is higher as a brightness of an image part, which corresponds to the first light, of an image obtained from the output of the imaging apparatus is higher.

48. The processing system according to any one of claims 1 to 47, wherein
the second light includes a visible light.

49. The processing system according to any one of claims 1 to 48, wherein
the second light includes a light component in a wavelength range that is shorter than the wavelength range of the first light.

50. The processing system according to any one of claims 1 to 49, wherein
a state where the wavelength range of the second light is different from the wavelength range of the first light includes a state where a peak wavelength of the second light is different from a peak wavelength of the first light.

51. The processing system according to any one of claims 1 to 50, wherein
a state where the wavelength range of the second light is different from the wavelength range of the first light includes a state where a peak wavelength of the second light is different from a wavelength included in a wavelength range part of the wavelength range of the first light in which an intensity of the first light is higher than a predetermined threshold value.

52. The processing system according to any one of claims 10 to 37, wherein
the first light emitted from the irradiated part includes a light emitted from a melt pool that is formed at the irradiated part by an irradiation of the energy beam.
